# EUROPEAN PATENT SPECIFICATION

(11) **EP 0 787 410 B1**
(45) Date of publication and mention of the grant of the patent: **21.03.2007**
(21) Application number: 95935250.1
(22) Date of filing: 28.09.1995
(51) Int. Cl.: H04N 17/00, H04N 9/475, H04N 5/04

(54) **DELAY DETECTOR APPARATUS AND METHOD FOR PLURAL IMAGE SEQUENCES**
VORRICHTUNG UND VERFAHREN ZUM DETEKTIEREN EINER VERZÖGERUNG FÜR MEHRERE BILDFOLGEN
DISPOSITIF ET PROCEDE DE DETECTION DE RETARD POUR SEQUENCES D'IMAGES MULTIPLES

(30) Priority: 11.10.1994 US 321280
(43) Date of publication of application: 06.08.1997
(73) Proprietor: Pixel Instruments Corporation, Los Gatos, CA 95032-1822 (US)
(72) Inventor: COOPER, James, Carl, Monte Sereno, CA 95030 (US); ANDERSON, Steven, J., Cupertino, CA 95014 (US)
(74) Representative: Cooper, John
(86) International application number: PCT/US1995/012597
(87) International publication number: WO 1996/011550

(56) References cited:
- US-A- 4 933 759
- US-A- 4 972 412
- US-A- 5 068 723
- US-A- 5 329 538

## Description

The invention relates to the measurement of delays of sequences of images such as film and video type signals in order to provide a measure of quality of image processing circuitry or to provide compensation processing of associated signals. In particular, it is known to subject video like signals to various types of processing which delay the signal by delays which can consist of multiple frame periods in length. It is desirable to measure this delay in order to modify the processing or transmission of the signal to keep the delay to a minimum, to delay corresponding signals by a corresponding amount to preserve mutual synchronization, or for other purposes as will become known to one skilled in the art from the teachings herein.

The field of the invention includes processing of sequences of images such as television video signals, motion picture film and the like by various electronic, optical and mechanical devices, which processing adds a delay to the signal. Since these image sequences are often utilized in conjunction with other sequences of events or signals, the delays which are imparted cause synchronization problems with the need to correct other signals accordingly, or otherwise to minimize the delay. Of particular interest are television programs consisting of a video signal and one or more associated audio signals where the delay of the video signal without delaying the corresponding audio signal creates a corresponding lip sync error which can be most annoying to the television program viewer. The image sequences may be conveyed in raster scan, bit mapped, compressed or any other of the various forms or formats which are well known in the art on electronic, magnetic, optical or other of the various well known storage, distribution and transmission methods.

### BACKGROUND ART

In the motion picture film industry it is known to measure the speed of film frames or sprocket holes past a given point to synchronize the film to sound recordings, however it is believed that there are no devices which measure the relative delay of a given film frame with respect to any plurality of its positions in time.

Several video processing devices utilize internal circuitry to determine the delay of the video signal through the device. While this method is capable of considerable accuracy and low cost, it is not readily suitable for measuring the delay through multiple devices since the individual delays would need to be summed by some means. In addition, the internal circuitry to provide such measurement must be incorporated in the design upon manufacture, otherwise costly retrofitting is required. There are already numerous devices in use which do not include such internal circuitry, thus there is a need for a device which can measure delays without internal modification of existing products.

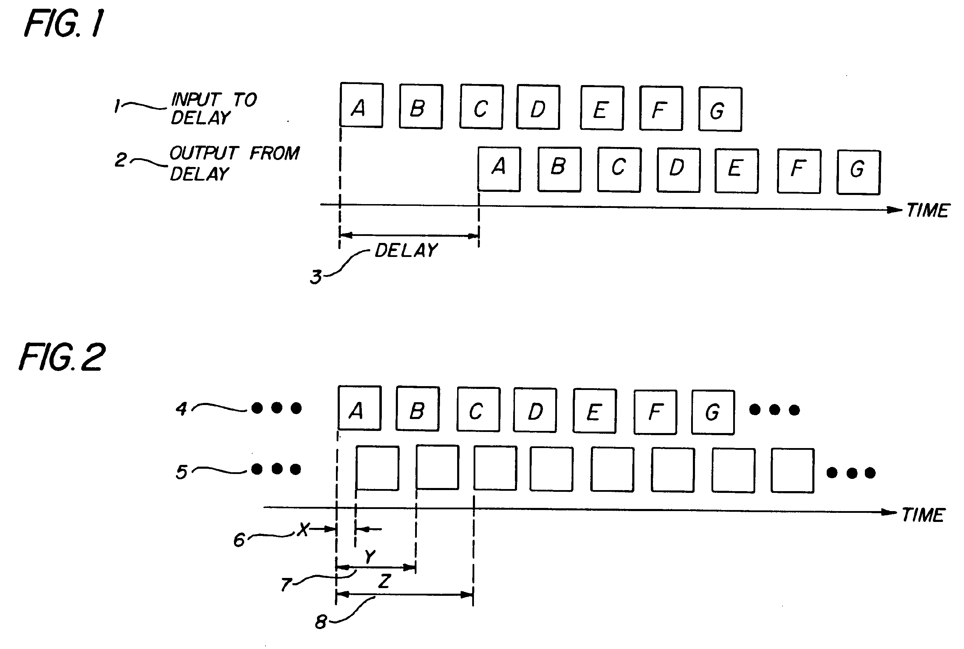

U.S. Patent 4,313,135 describes an audio to video synchronization apparatus and method with a method of detecting the delay of a video signal by comparing the relatively delayed and undelayed signals in a phase locked loop type circuit coupled with a video correlator (16 of Figure 2). The correlator performs a correlation of the delayed and undelayed video to determine if the same frame of a current (undelayed) and previous (delayed) signal are being applied to the inputs.The '135 correlator operates such that each signal, delayed and undelayed, is sampled and the sample value stored as in a sample and hold circuit, at the center of several active video lines. The line samples are subtracted, i.e. the sample from line number X from input (undelayed) video is subtracted from the sample from X of output (delayed) video, the absolute value of the difference being a measure of the correlation or matching of the lines. The absolute value of the differences for a number of lines is averaged thus giving a voltage which is proportional to the correlation between the delayed and undelayed video signals. If the undelayed and delayed video signal present the same image frame during the frame period they will match, thus the difference voltage will be low indicating the correlation is high. If the undelayed and delayed video signal present a different image frame during the frame period they will not match due at least to random noise, then the difference voltage will be higher indicating the correlation is low. This signal is used to determine if the delay is less than a frame or greater than a frame. In the presence of NTSC color subcarrier it is known that the picture period comprises two frames (or four fields), the subcarrier being reversed on the second frame with respect to the first. This allows the correlator to distinguish delays of up to one frame, from delays between one and two frames but can not distinguish delays over two frames from delays less than two frames, since the subcarrier for frame 1 is the same phase as in frame 3.

The circuit described in '135 has difficulty distinguishing the number of frames of delay of the delayed signal once the delay exceeds one unique picture period, since the correlation when anything but a less than one unique picture period signal delay is present is always low. Consequently while the correlation system shown in '135 may distinguish between a partial frame and a one plus partial frame delay, it is unsuitable for example to use to distinguish a delay of 3 frames from a delay of one frame.

U.S. Patent RE. 33,535 reissued February 12, 1991 with an initial issue date of October 27, 1987 shows how to measure relative audio to video delays by use of timing signals encoded on the video, but does not have measurement of relative delay by use of the video itself.

### DISCLOSURE OF THE INVENTION

The invention described herein provides for taking a set of samples at known image locations on a known image frame of a relatively undelayed video or other type signal or image conveyance and taking a set of samples from corresponding image locations of each of multiple relatively delayed versions of said image frame. For most images, especially rectangular and the special rectangular case, square, the samples taken are located within a circle which is contained within the rectangle. It is thus preferred to take these samples from within the circle, and in particular from within a circle which has a diameter which is 10% to 50% smaller than the smaller side dimension of the rectangle and centered therein. This range of sizes is believed to provide optimum image to image differences. This is believed to be caused by the fact that the important parts of the image, and hence the most motion and detail, are intentionally kept in the center of the frame during production. It is also preferred to take the samples on only the luminance portion of the image, since the colors of a given image are often noisy, distorted and lower resolution as compared to the luminance, however if the color is of adequate quality, the samples may be taken accordingly from one or more of the various color components. Such color component operation may be simply obtained by placing a color component separator circuit in front of the A-D input as is well known in the art.

While the words sampling and taking samples as used herein includes the traditional meaning of taking and storing an analog or digital value of the brightness of the luminance or chrominance of the image, it will be understood that this wording is intended to also include the taking of any parameter which is related to the image and which in a given location of the image frame can be expected to be different for different images. What is important is that some measure of the image be taken at a given location so that the accumulation of the image to image differences of multiple ones of these measures may be made in order to determine a measure of image correlation or matching.

The undelayed sample set is compared to each of the delayed sample sets to determine which delayed sample set most closely matches the undelayed sample set. By determining the most closely matching delayed image sample set the delay of the delayed image is thereby determined to an accuracy of one image period. The delay may be determined with higher accuracy by comparing a known point on the undelayed image signal or conveyance to a known point on the delayed image signal or conveyance for a fine determination of the relative delay of the image frame period, or the phase between the delayed image and undelayed image. The points on the delayed or undelayed image signal may be sync pulses, sprocket holes, frame headers, or other known points whose location is defined. The fine delay is then combined with the coarse (frame match) delay to obtain the more accurate delay value. The invention is also useful for matching images or detecting a change in an image, without any determination of delay involved.

This delay measurement invention is especially useful for image systems having variable frame rates, as well as variable delays. For example imaging systems which have frames sent at constant rates where the constant rate can be changed from time to time as well as systems where each image, or group of images has associated with it a display time which determines how long each image or group of images is to be displayed. Such systems are novel and provide highly efficient transmission of motion images, since the frame rate may be changed to suit the amount of motion to be displayed at a particular instant in time. Such systems may be used for example in video systems or in film systems which are electronically controlled. The present invention is also useful for conversion systems which convert images from one format or system to another, such as for example a television standards convertor.

When the invention is used for determining the best match between a first image and a set of other images, this embodiment comprises taking a first set of samples from selected known locations on the first image, taking a second set of samples from one of the set of other images at the same or similar image locations and taking a third set of samples from another of the other images at the same or similar image locations, thus providing at least three sets of samples. The first set of samples is compared to the second set of samples and to the third set of samples, etc. to determine which most closely match the first set. The most closely matching set is useful in that it indicates a high probability of an image match.

When the invention is used for determining the delay of a delayed version of a sequence of images with respect to a relatively undelayed version, the embodiment comprises taking a first set of samples of one of the images of the undelayed sequence at known sample positions, followed by taking at least a second and third set of samples for separate images of the delayed sequence at the same or similar known sample positions and comparing the first set of samples to the second set of samples and to the third set of samples, etc. to determine which of the second, third etc. set of samples most closely matches said first set. It will be understood that while samples are preferred to be taken from consecutive images, that it is also useful to take them from nonconsecutive images, and in fact this may be required in systems which drop, repeat or interpolate images such as in standards convertors and many compression systems.

It may be noted that while the above description pertains to taking samples for comparing one undelayed image and a plurality of delayed images, it is also possible to compare one delayed image to a plurality of undelayed images, or to compare a plurality of undelayed images to a plurality of delayed images as will become apparent to one skilled in the art from the teachings herein.

The invention is useful with any sort of time related transmission, storage or conveyance of image information, such as television video, film, holographic recording, light transmission and others as will become apparent to one skilled in the art from the teachings given herein.

### BRIEF DESCRIPTION OF THE DRAWINGS

Figure 1 is a drawing demonstrating the time relationship between relatively delayed and undelayed sequences of images.
Figure 2 is a drawing demonstrating the multiple possible time relationship between relatively delayed and undelayed sequences of images.
Figure 3 is a drawing explaining a first embodiment of the invention.
Figure 4 is a drawing showing a first embodiment of the invention.
Figure 5 is a drawing showing a second embodiment of the invention.
Figure 6A is a first schematic drawing of the preferred embodiment of the invention.
Figure 6B is a second schematic drawing of the preferred embodiment of the invention.
Figure 7A is a third schematic drawing of the preferred embodiment of the invention.
Figure 7B is a fourth schematic drawing of the preferred embodiment of the invention.
Figure 8A is a fifth schematic drawing of the preferred embodiment of the invention.
Figure 8B is a sixth schematic drawing of the preferred embodiment of the invention.
Figure 9A is a seventh schematic drawing of the preferred embodiment of the invention.
Figure 9B is a eighth schematic drawing of the preferred embodiment of the invention.
Figures 10A and 10B are a graphical representation of the DSP operation of the SPROC IC.

### MODES FOR CARRYING OUT THE INVENTION and INDUSTRIAL APPLICABILITY

**Figure 1** is a drawing demonstrating the time relationship between relatively delayed and undelayed sequences of images. An input sequence of images is shown as 1 and the delayed version of the same sequence of images is shown as 2. It is clearly seen that image A is delayed by time 3, and correspondingly that images B-G are also delayed by the same amount of time. This sequences of images is shown independent of the medium by which they are conveyed, and for example could represent a video signal which is passed through a video frame synchronizer or a motion picture film which is passed from one point to another with a temporary storage bin there between. Note that while Figure 1 shows a constant frame rate, this is done only by way of example and non-constant frame rates are understood to be represented as well.

If the film were passed by one point at a first rate, for example a projection aperture in one theater or scanner and into the bin, and then taken out of the bin at another rate and passed by another point, for example a projection aperture in a second theater or scanner, the delay would be constantly changing as the amount of film stored in the bin increases or decreases due to the different feed in and feed out rates. Such operation may be found for example in multiple projection scanners providing movies starting at different time increments (such as every 15 minutes) or for multiple channel television distribution systems. Such operation could also be found for example in multiple room movie theaters providing movies starting at different time increments. In such systems it would be desirable to also delay a digital audio signal in memory, having it synchronized to the various image projections.

In television systems, video signals are frequently passed through video frame synchronizers where they are resynchronized to a different reference clock. This action results in a constantly varying delay amount which requires that the audio portion of the program also undergo a constantly changing delay in order to keep it in synchronization with the video. Such systems were described in more detail in the '135 patent and are well known in the art.

**Figure 2** is a drawing demonstrating the multiple possible time relationship between relatively delayed and undelayed sequences of images. An undelayed image sequence 4 is shown with its time relationship to a sequence of delayed images 5. Because it is not known which delayed image corresponds to a given undelayed image, the delay may be amount X shown by 6, amount Y shown by 7, amount Z shown by 8 or any other amount corresponding to one of the delayed images.

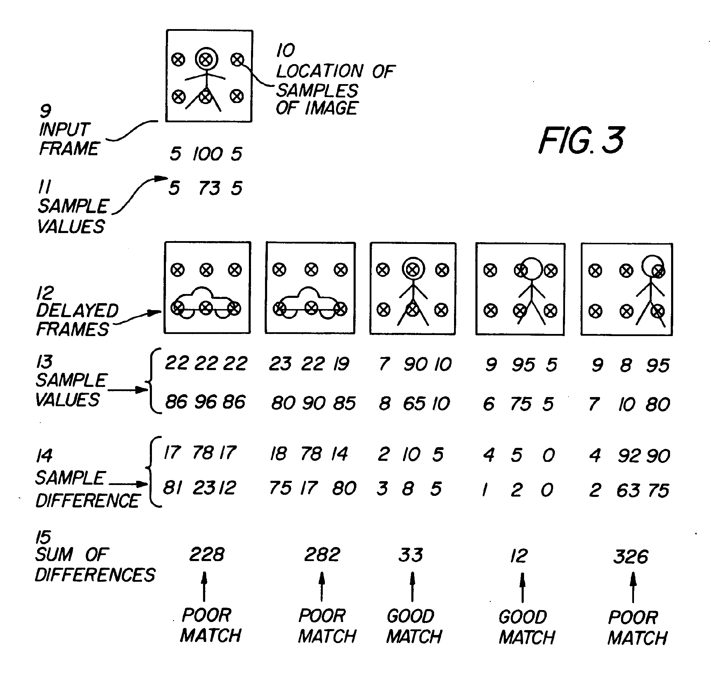

**Figure 3** is a drawing explaining a first embodiment of the invention showing a method of determining how well a given image matches each of a number of other images. The other images may be a delayed version of an image stream from which the given image is taken, or may be other relatively unrelated images. The first or input image frame 9 is shown with six samples being taken at locations 10 shown by a circled X. The brightness values 11 of each of the six samples is shown in a corresponding matrix below the image 9.

A group of comparison images 12 which for this example may be delayed frames of the image sequence or independent images, which 9 is taken from is shown below. The sample brightness values for each frame is shown below the frame as 13. The magnitude of the difference between frame 9 and each delayed frame is shown as 14 below the corresponding frame. A sum of all of the difference magnitudes is shown as 15 below 14, with each being indicated as a good match or a poor match. It should be noted that two of the three frames with the stick figure are good matches, and the last frame where the stick figure has moved and the two frames with an auto figure are poor matches. In operation, it is preferred that the invention determines which of the good matches is the correct one by repeatedly determining the best match for each new input image frames and keeping a running average or history of which frame number is the best. Any temporary ambiguity such as shown in Figure 3 may be resolved by reference to the history. For example, if the third frame has been the correct frame for the past several frames, then it is highly likely that the third frame is the correct match, even though its sum of differences (33) is higher than the fourth frame sum of differences (12). In this manner, the correct one of delays 6, 7 or 8 of Figure 2 may be determined.

In addition, other operations may be utilized to resolve such ambiguities. For example it may be desired to set a threshold below which the match value must be before accepting that frame as a match. It is also useful that the next lowest match be a known amount above the threshold (an offset value), or above the lowest match value by a known amount or both. The threshold value and the known amount above the threshold may be suitably adjusted to match the amount of motion or frame/field differences in the signals such that for signals having lots of differences which provide a large number of high quality correlations the threshold and the known amount are set to relatively large amounts. For signals having few high quality correlations, the threshold and offset values can be set lower, thus allowing more frequent updates than would be obtained with high threshold and offset value, but with a lower immunity to errors. In addition, the signal to noise ratio or other measure of quality of the images or video signal(s) can be utilized to adjust these parameters, since a noisy signal provides more frame to frame changes (due to noise) thus allowing higher threshold and offset, up to a limit. For television video signals, at about a 45 dB signal to noise ratio, the noise on the sync causes the PLL to jitter, causing the sampling accuracy to diminish. The diminished sampling accuracy will add to the difference numbers due to the lack of positional correlation between samples from the (ideally) same position from undelayed and delayed frames.

For a given set of circumstances which indicates a match of images, it is useful to require a match at the same frame position for a known number of times, or alternatively for a known consecutive number of times before accepting that match position. It is also useful to only accept a match once in a given time period, forcing new match data to be ignored or held in abeyance until a known time after a previous match. Such operations will be recognized to provide a certain amount of security from false matching in the event that noise or other problems create ambiguous match data such as shown with respect to the third and fourth frames of Figure 3.

The matching of images as shown in Figure 3 thus determines a coarse delay to the nearest frame, and the fine delay is determined as shown in figure 2 by knowing which of the exact delays to choose. It is of course possible to actually only determine delay 6 and calculate delay 7 or 8 by simply adding two or three delay periods to 6 as is appropriate from the determination of the coarse delay as shown in Figure 3, which coarse delay corresponds directly to the number of frame periods from a given undelayed to a given delayed frame.

It will be recognized by one skilled in the art that the inventive method of matching a given image to other images will have other uses as well as will become apparent to one skilled in the art from the teachings herein, for example finding a particular high resolution image or series of images stored in a data base of images when one has a lower resolution version of the image available for comparison. Such an operation could aid in locating the exact source of pirated copyrighted images when only a poor quality copy was available.

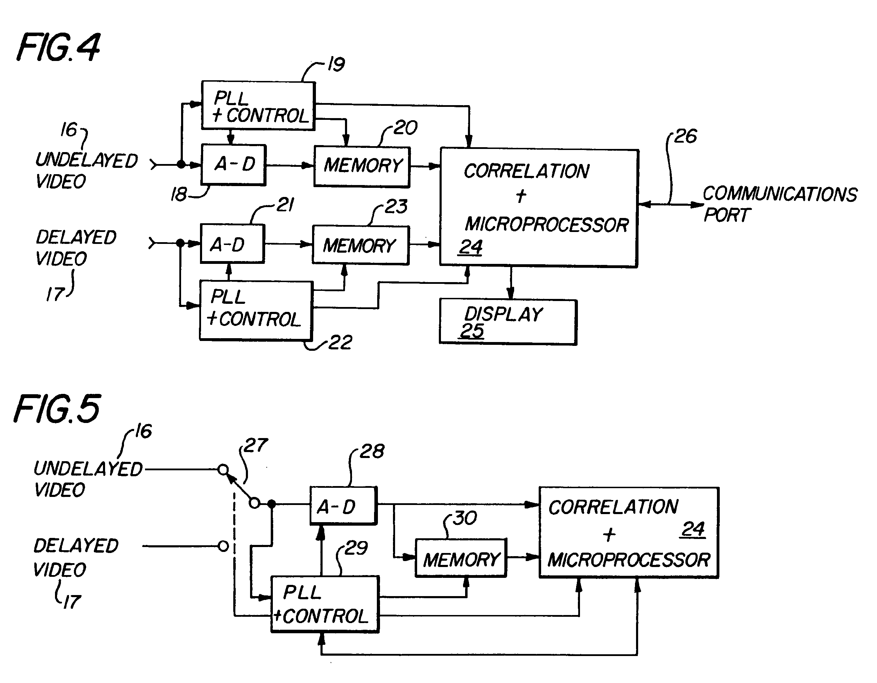

**Figure 4** is a block diagram showing a first embodiment of the invention for use with video signals. The undelayed video signal 16 is coupled to a PLL (phase locked loop) and control circuit 19 and an A-D convertor 18. Samples of the image are taken by the A-D at predetermined points on the image as controlled by 19. The samples are stored in a memory 20 and subsequently coupled to the correlation and microprocessor circuit 24 when all samples for a given image have been taken. Of course, it is possible to start as soon as the first pair to be correlated are available.

Similarly, the delayed video signal 17 is coupled to a PLL and control circuit 22 and an A-D convertor 21. Samples of the image are taken by the A-D at roughly the same predetermined points on the image as controlled by 22. It is of course desirable to have the samples taken at exactly the same points, however nothing is perfect, and it will be appreciated that often the image is the same or nearly the same in the entire area around the desired sample location so that exact positioning of the sample, while being desirable, is not required. The samples of the delayed image are stored in a memory 23 and subsequently coupled to the correlation and microprocessor circuit 24 when all samples for a given image have been taken. The correlation and microprocessor 24 operates on the samples from the memory to compute frame differences as described in respect to Figure 3. In addition, 24 receives vertical and horizontal sync signals from 19 and 22 in order to allow the calculation of the exact delay 6, 7, or 8 as described in respect to Figure 2. The desired result of the matching, either the calculated delay, the identity of the particular matched image, or the desired match information may then be displayed for the user on a display device 25, or communicated to other equipment over a communications channel 26.

One skilled in the art will recognize that the elements 25 and 26 may be any of those well known in the art and may be selected to fit a particular application without departing from the spirit and scope of the invention.

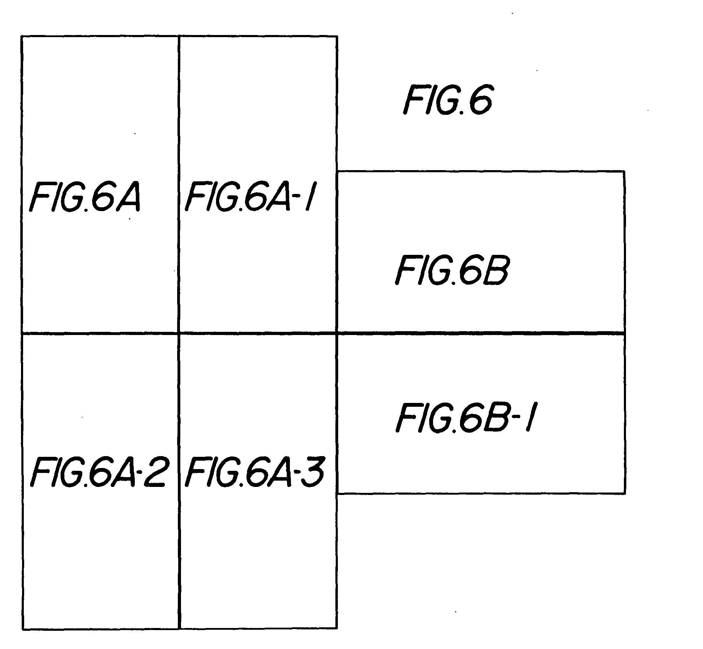

With respect to **Figure 5,** it will be appreciated that the operation of the A-D, PLL and memory for each channel is the same, and may very well be performed by a single circuit which switches between undelayed video 16 and delayed video 17 with a switch 27. This switch will be understood to also represent the selection of given images one at a time under operator or other control such as by placing physical images on a scanner. The A-D 28 then operates to sample the selected signal under control of 29 and store the sample in memory 30, or alternatively to couple the sample directly to 24.

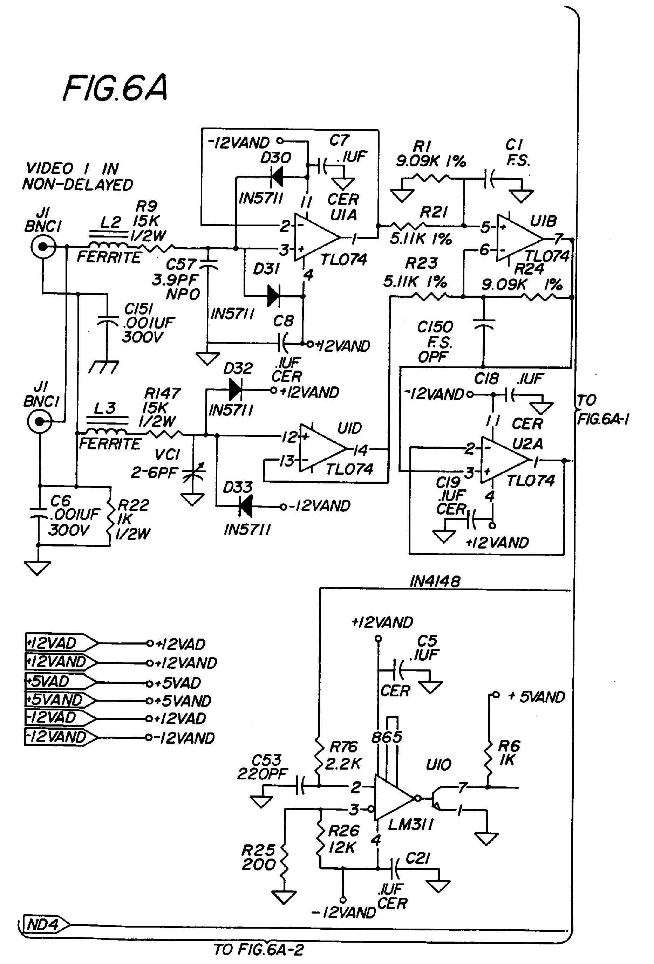

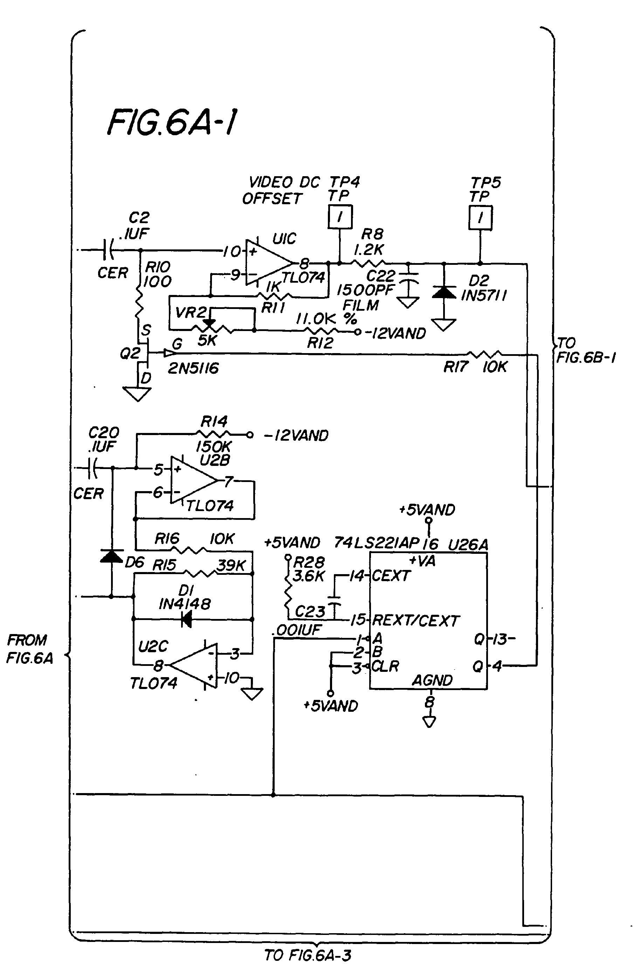

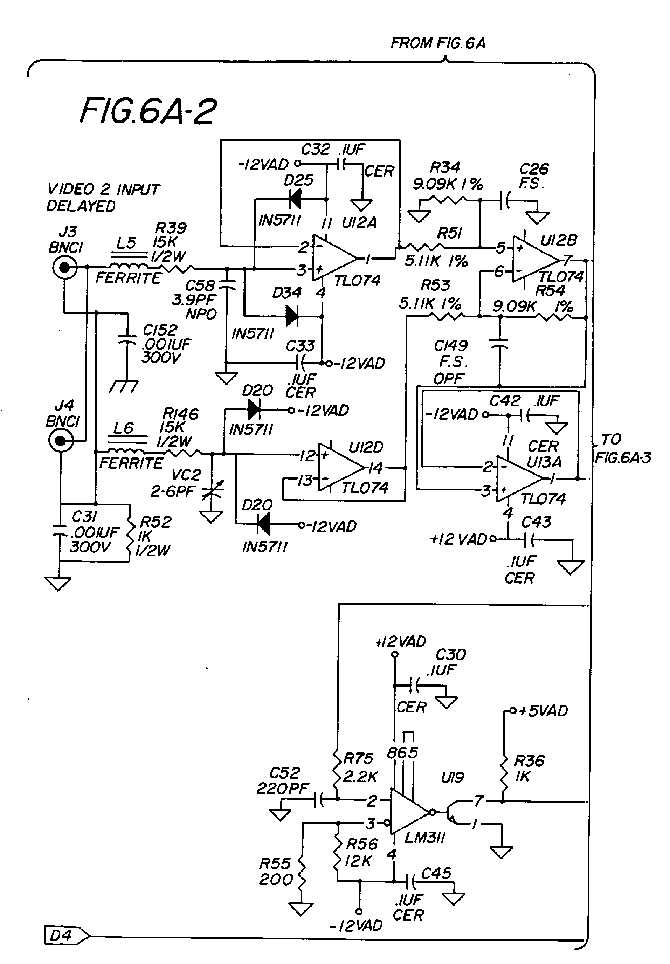

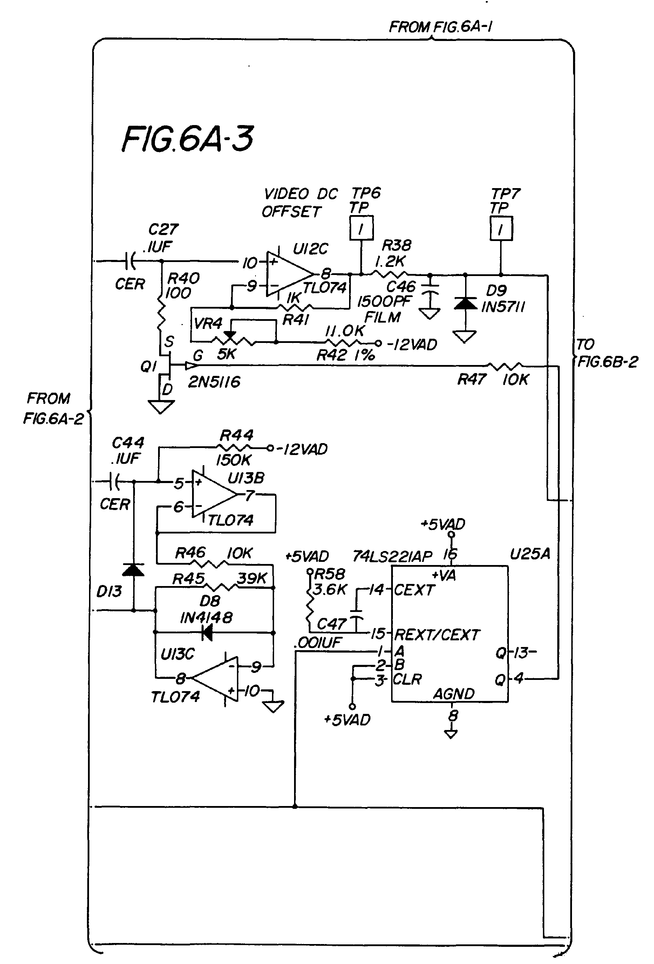

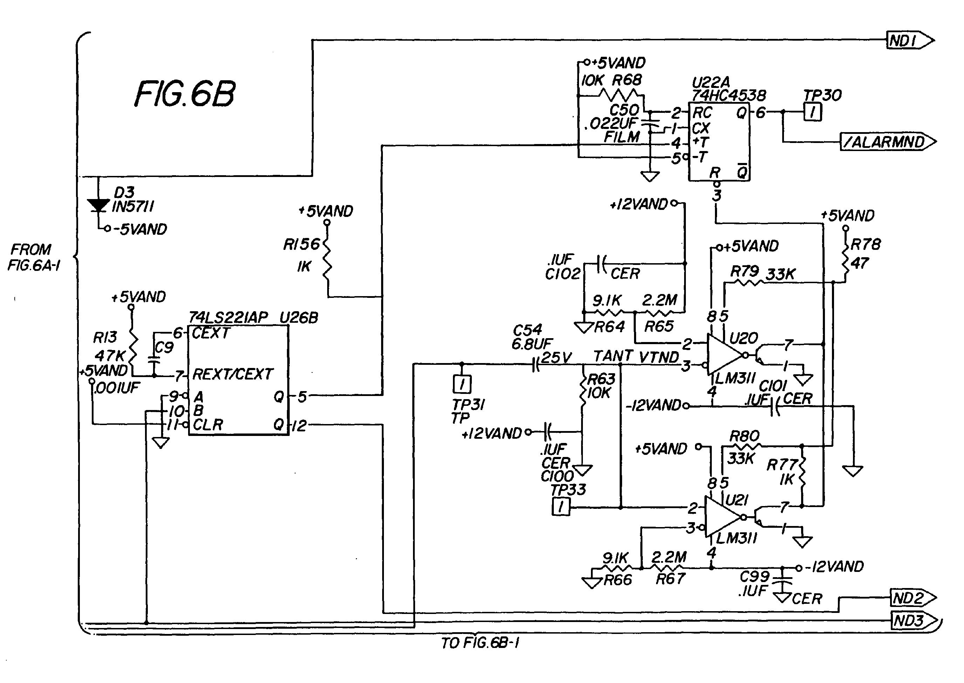

Figures 6A through 9B comprise a schematic diagram for the preferred embodiment of the invention, which schematic diagram which will serve to illustrate the preferred embodiment of the invention and which may also be copied directly and used with the programmable device programs given herein to allow one of ordinary skill in the art to practice the invention without any further invention or undue experimentation. For the sake of completeness, a brief description of the schematic figures is given below. It will be appreciated that the preferred embodiment given in these schematics is for use with analog video signals, however the invention may also be practiced with other types of images conveyed in other forms. In particular, the use of the invention with digital video data streams is believed to be of particular value, especially in conjunction with the transmission or delivery of compressed video, such as compression by MPEG-2 compression standards as is contemplated for future consumer video program distribution. The modifications necessary to the preferred embodiment for use in such applications will be readily apparent to one of ordinary skill in the art and one of such skill will be able to practice the invention without additional invention or undue experimentation from the teachings provided herein.

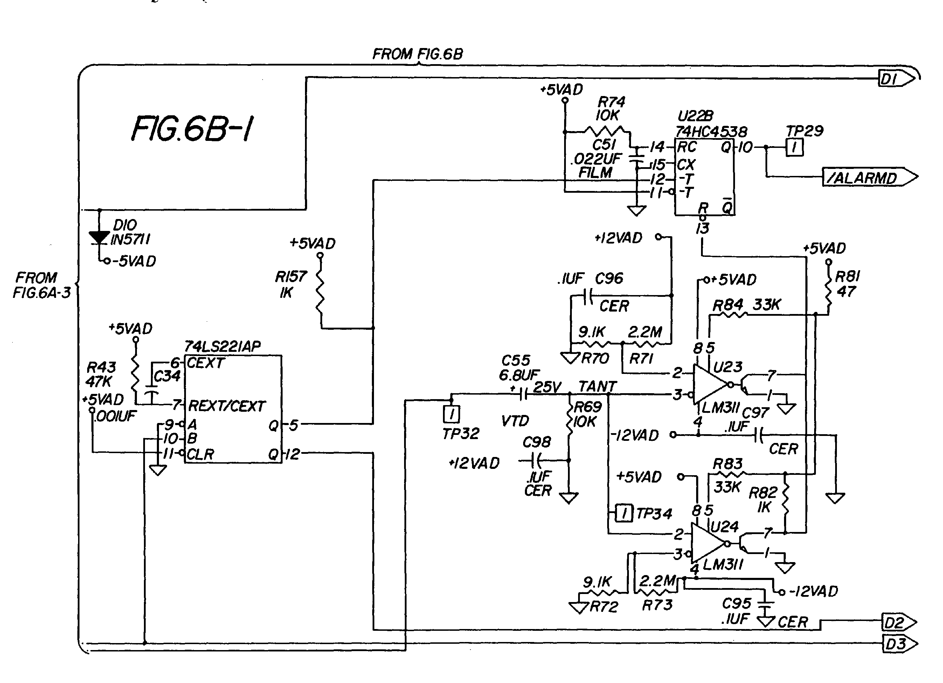

**Figure 6A and 6B** comprise left and right hand portions of the first sheet of schematic drawings of the preferred embodiment of the invention. There are two very similar analog video input circuits occupying the upper and lower portions of this sheet of schematics. The upper portion will be described and one skilled in the art will understand the lower portion from the description thereof.

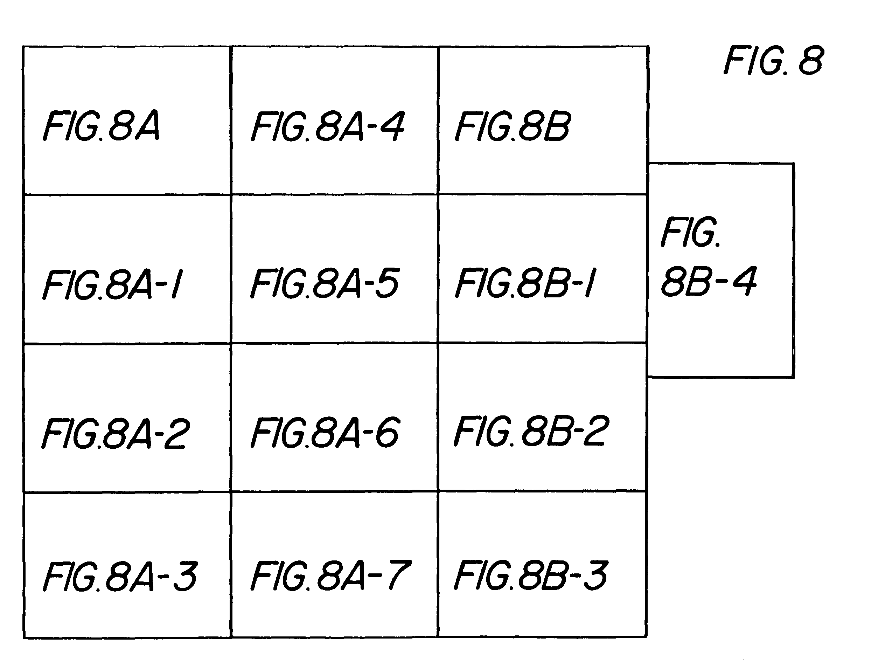

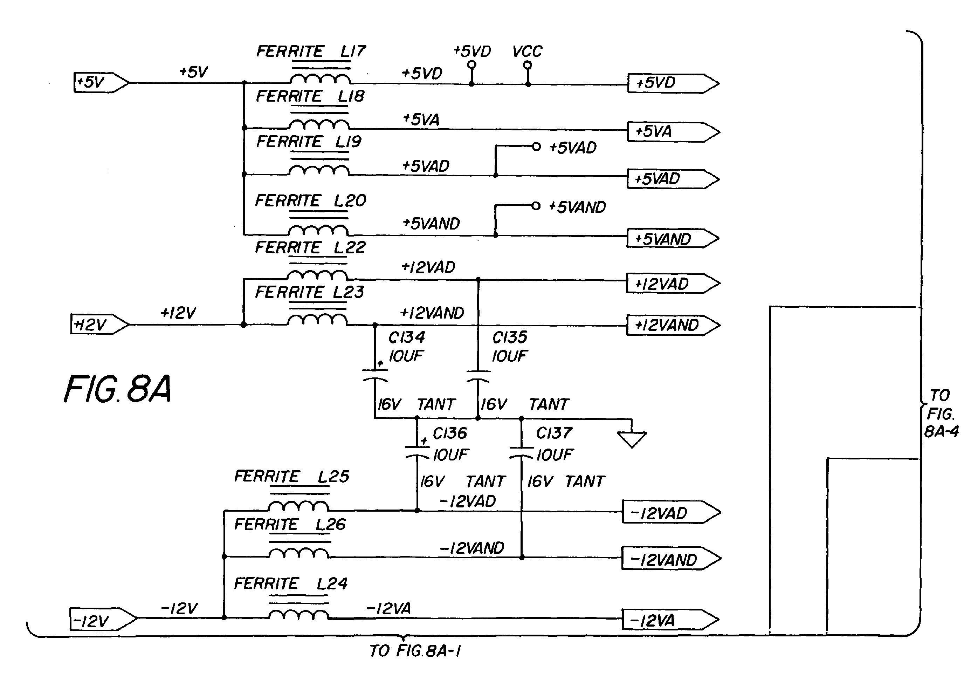

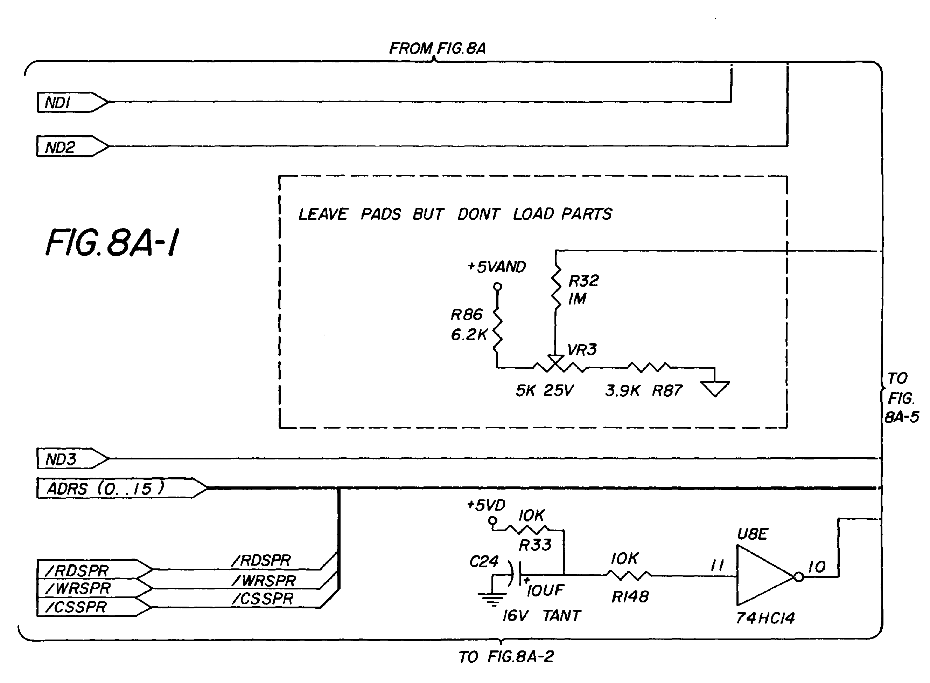

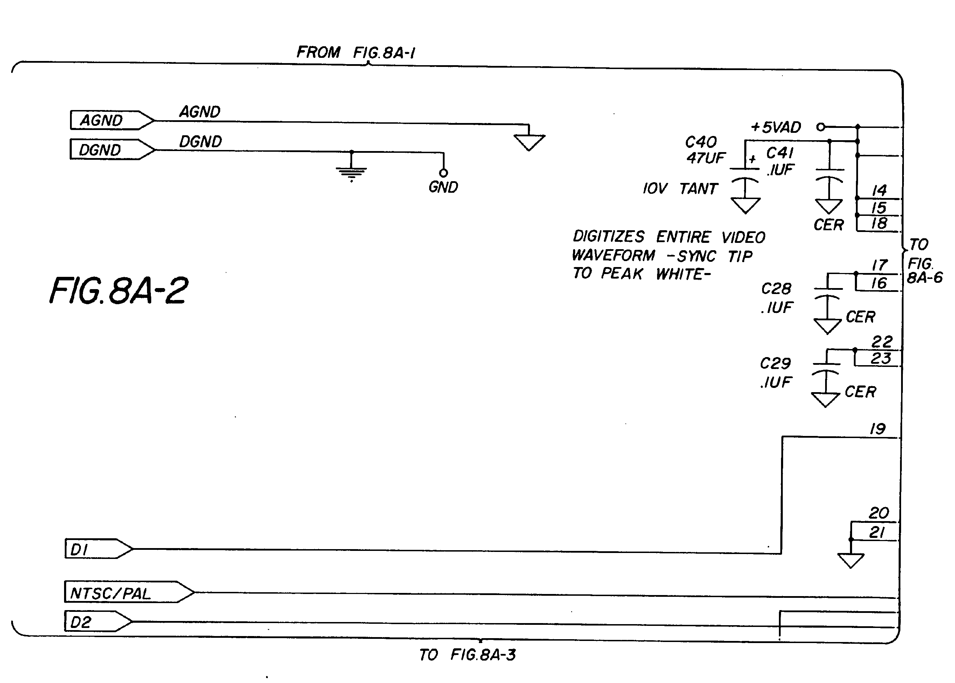

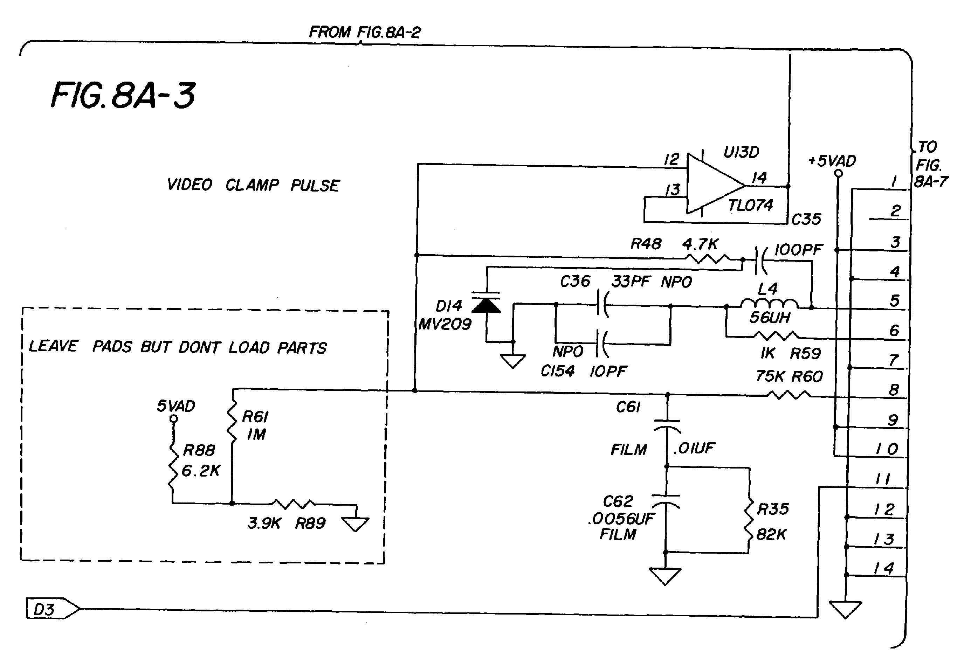

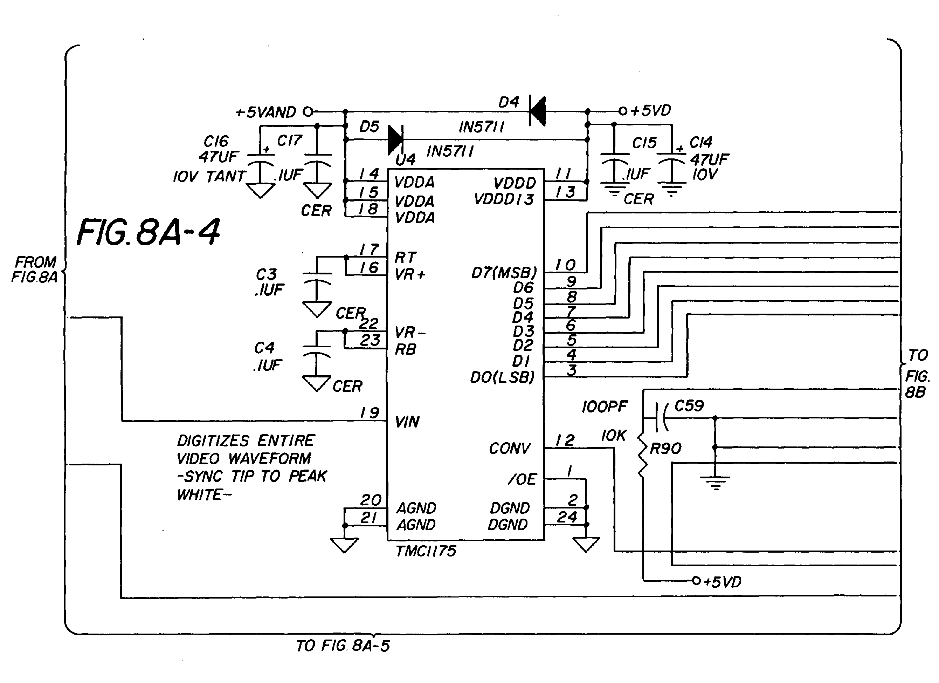

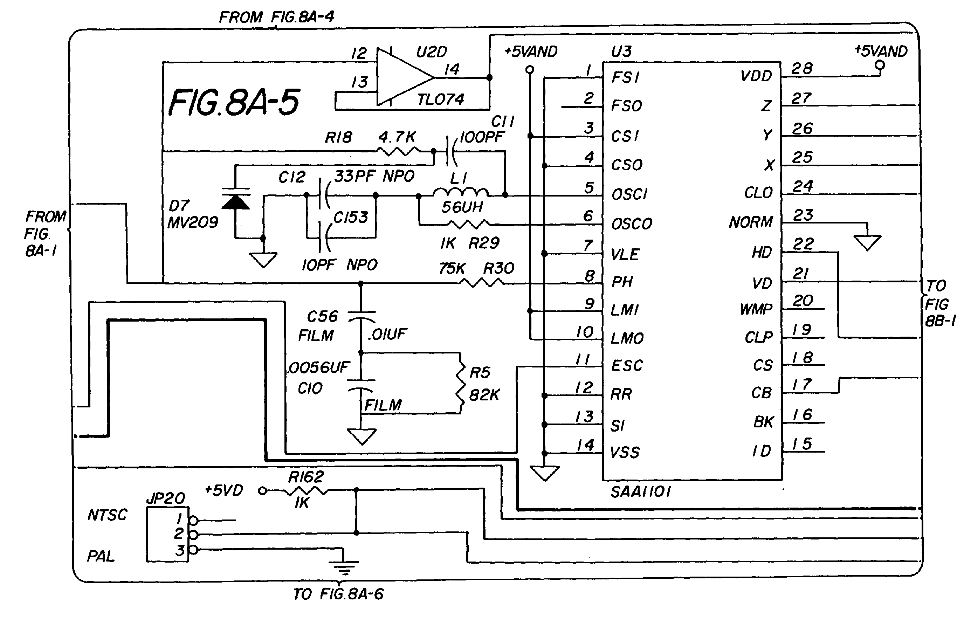

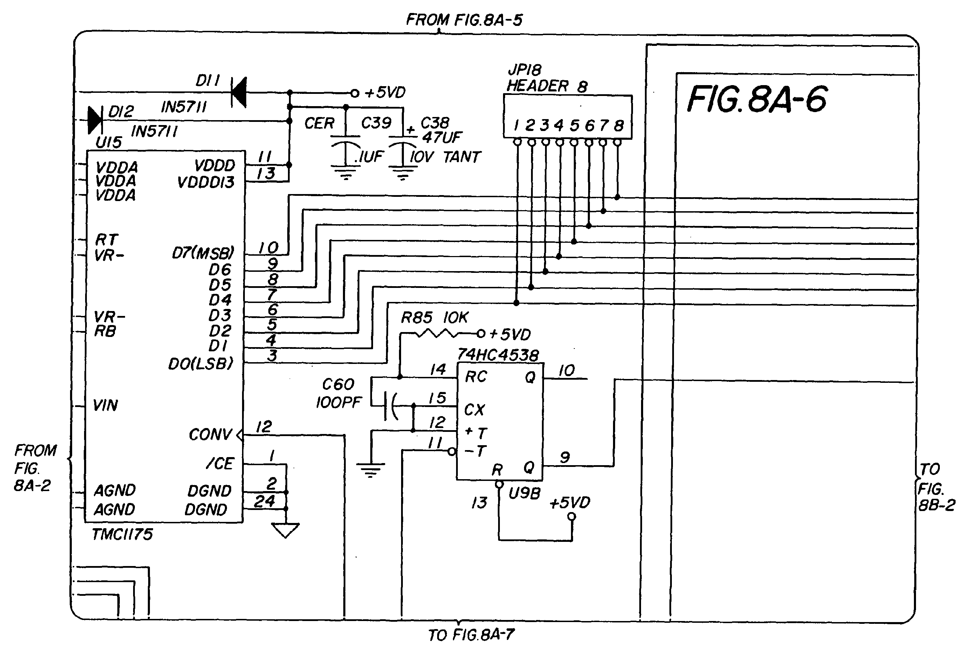

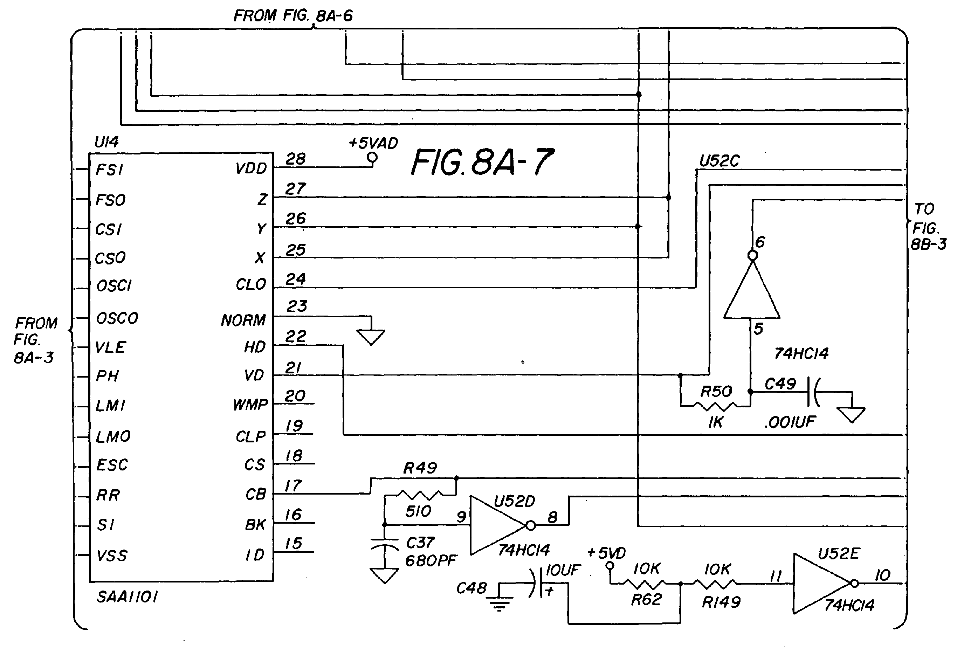

On the left it will be noted that there are several power supplies coupled to the circuit, there being separate supplies for the delayed (D) and non-delayed (ND) channels, as well as separate analog and digital voltage supplies, as is customary in the art. Input video is coupled to a looping input provided by J1 and J2 with high frequency isolation being provided by L2 and L3. Operational amplifier sections U1A, U1D and U1B comprise a balanced input amplifier having good common mode noise rejection with diodes D30-33 providing high voltage protection to the inputs. CMRR may be optimized by adjustment of VC1. The buffered video signal from U1 pin 7 is coupled to a sync tip clamp and sync stripper comprised of U2A-C and U10 which provides composite sync at U10 pin 7. Comp sync is coupled to one shot U26A which provides a back porch clamp pulse for FET Q2. In addition, comp sync is coupled to H sync separator one shot U26B which generates H rate pulses from comp sync with comp sync and the H pulses being coupled to other parts of the circuit on Figure 8A as indicated by ND2 and ND3.

Video from U1B pin 7 is buffered by U2A and AC coupled by C20. The AC coupled video is again buffered by U2B and applied to amplifier U2C, which operates as a comparator. When any part of video (primarily sync tip) from U2B pin 7 goes below the reference on U2C pin 10 (ground) the output of U2C goes positive, charging C20 positive through D6, thus counteracting the tendency for video at U2B to go below the reference. A current source R14 charges C20 low during active video, so at each sync tip a small amount of current is needed through D6 to keep the video signal at the proper level. This action causes video to be sync tip clamped at C20 and thus the sync tip of the video signal at U2C pin 8 normally extends the diode drop of D6 (approximately .6V) above ground. The video signal from U2C pin 8 is applied to comparator U10 where sync is converted to TTL level at pin 7. The diode D1 in the feedback path of U2C is used to change the gain of that stage from R15/R16 (≈ -4) for negative portions of the signal (sync tip) to a gain of R_{D}/R16 which is much less than one for positive portions of the signal (active video), thus providing excellent immunity to noise and APL level changes during active video. The addition of D1 thus creates an amplifier having nonequal gains for video above and below the threshold set on U2C pin 10.

The operation of this novel sync tip clamp and sync stripping circuit is described in more detail in U.S. Patent Application S/N 837,323 filed 2/18/92.

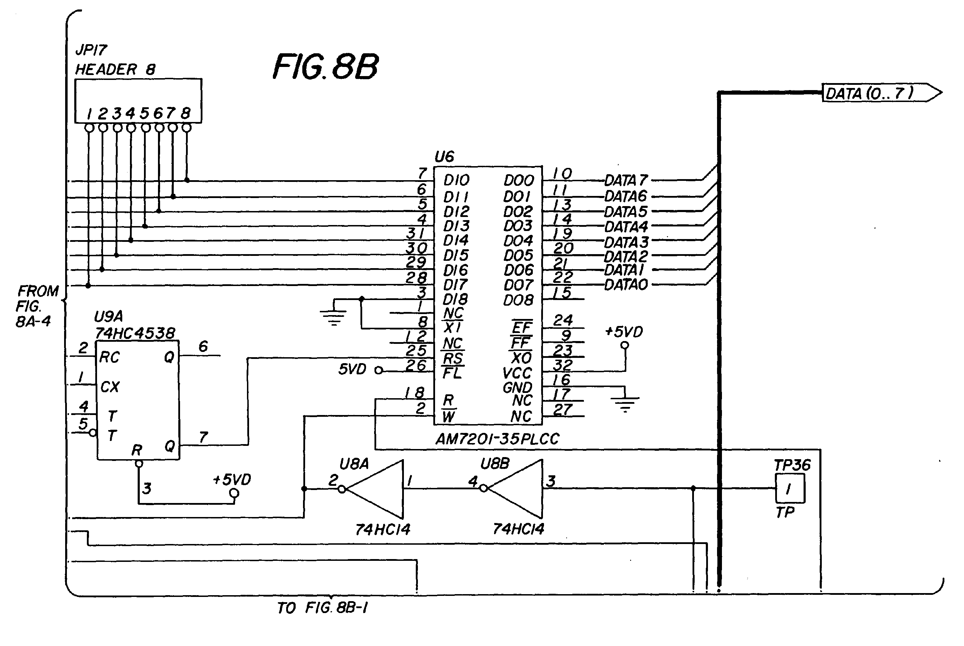

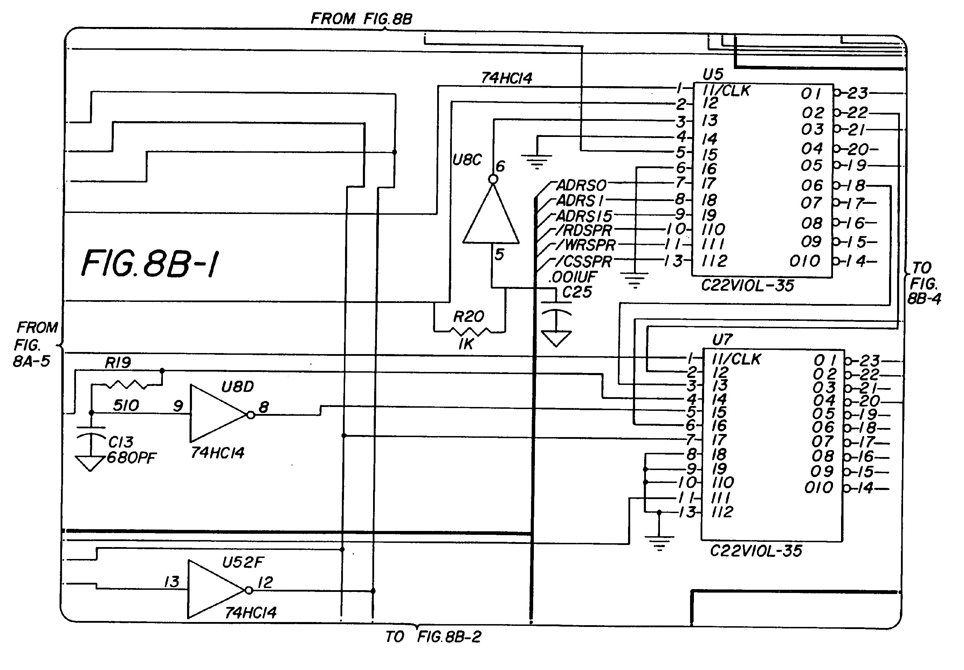

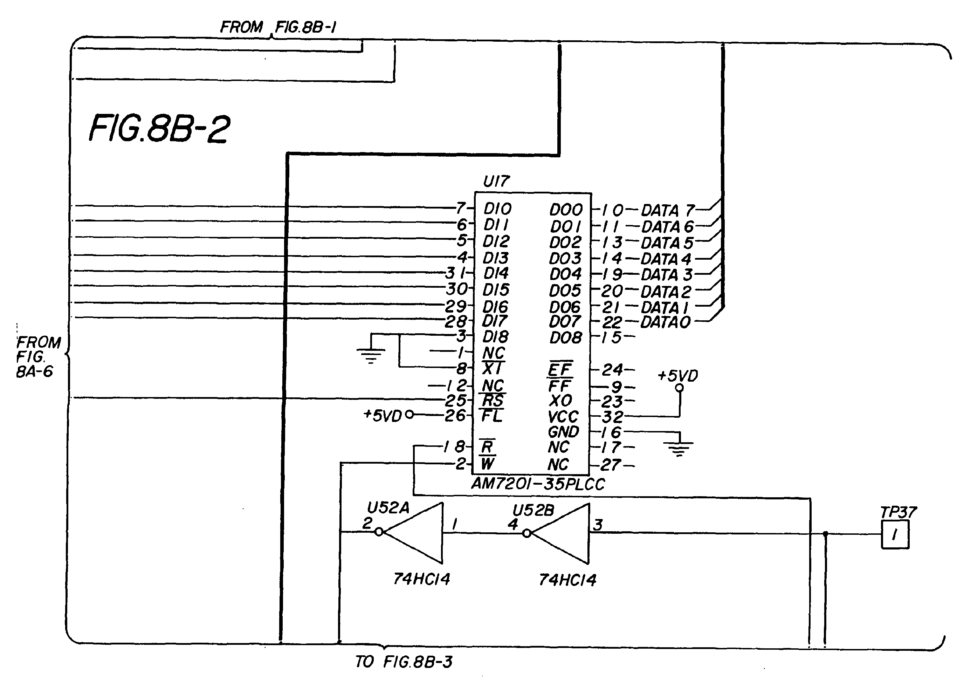

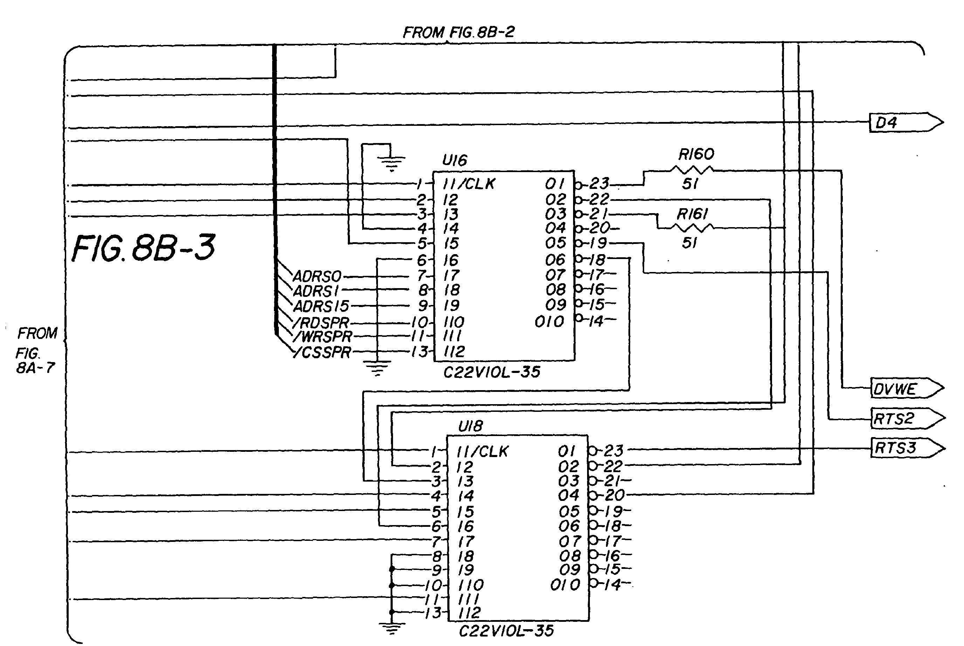

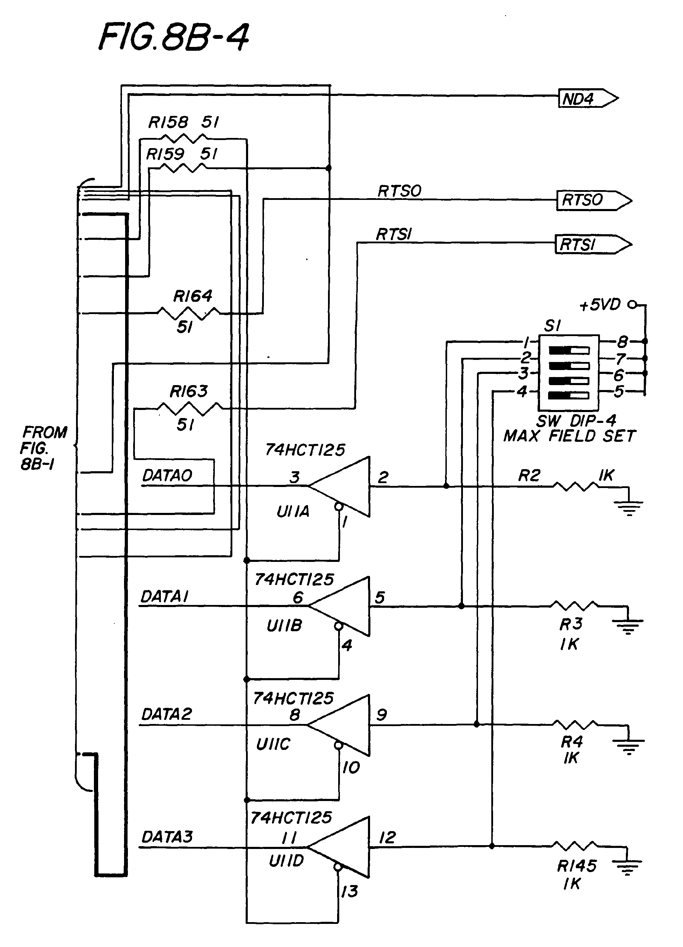

The H pulse from U26B pin 5 is also coupled to a retriggerable oneshot alarm circuit U22 which will time out generating /ALARMND if incoming sync is missing. The alarm oneshot may also be triggered via reset, thus generating the alarm in the absence thereof, by the U20 and 21 circuit in response to ND4 from Figure 8B. ND4 is responsive to the error voltage of the horizontal PLL in sync generator IC U3 and operates to generate an unlocked PLL originated alarm via U22A when the PLL unlocks due to any fault such as missing input signal.

The video signal from U1B pin 7 is clamped to ground by clamp circuit Q2, C2, U1C as is known in the art, and a known DC offset is added by U1C in response to VR2. The video with the offset (ND1) is coupled to the A-D convertor U4 on Figure 8A, which convertor digitizes the entire active video portion of the video waveform. Diodes D2 and D3 provide protection for the A-D in case of transients present on the input. Low pass filtering is provided by R8/C22 to minimize correlation errors due to horizontal displacement of active video which may occur in some delay devices such as video synchronizers, as well as removing chroma.

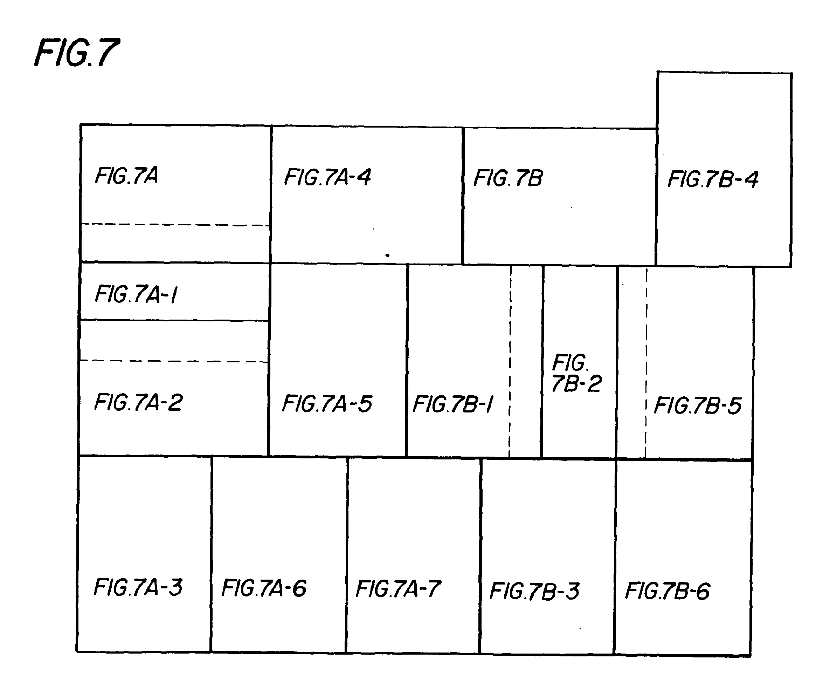

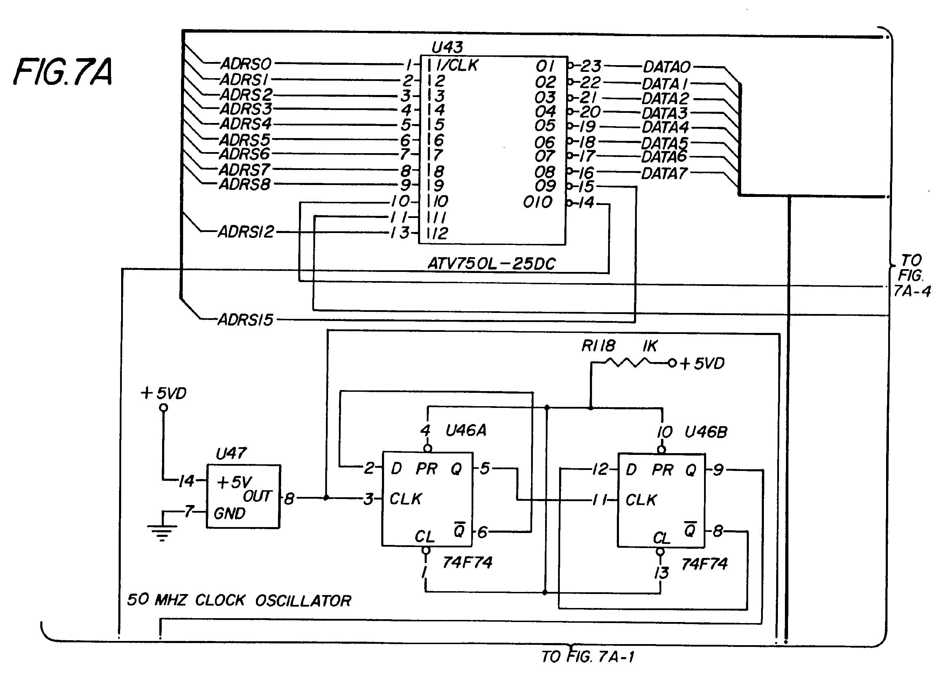

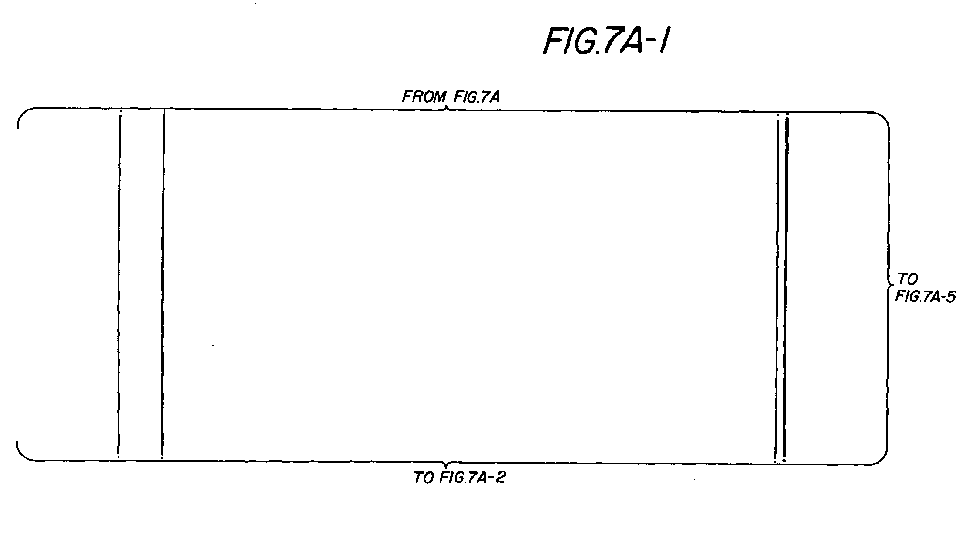

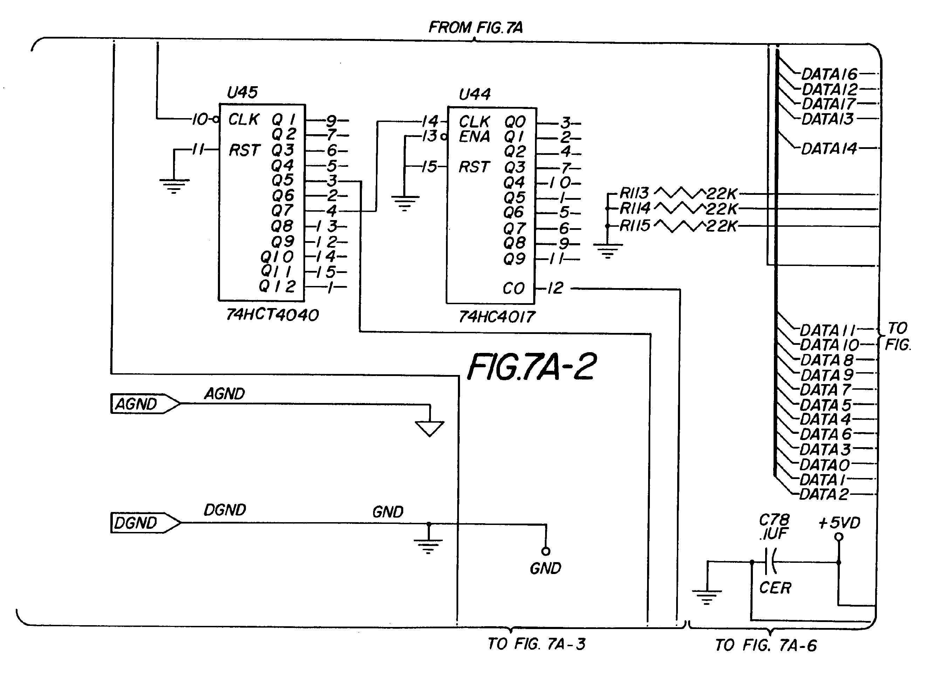

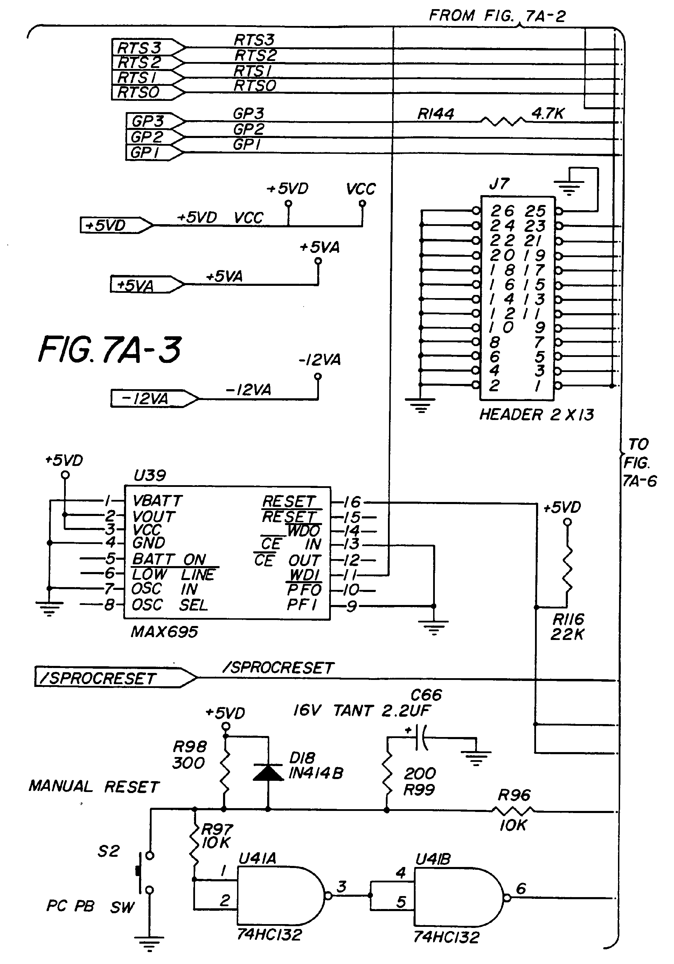

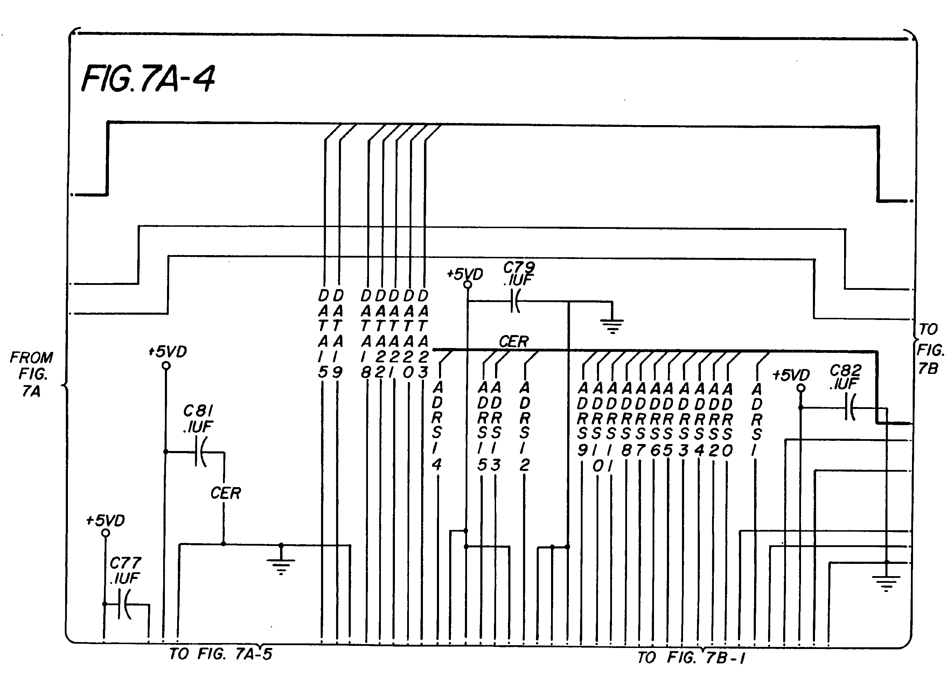

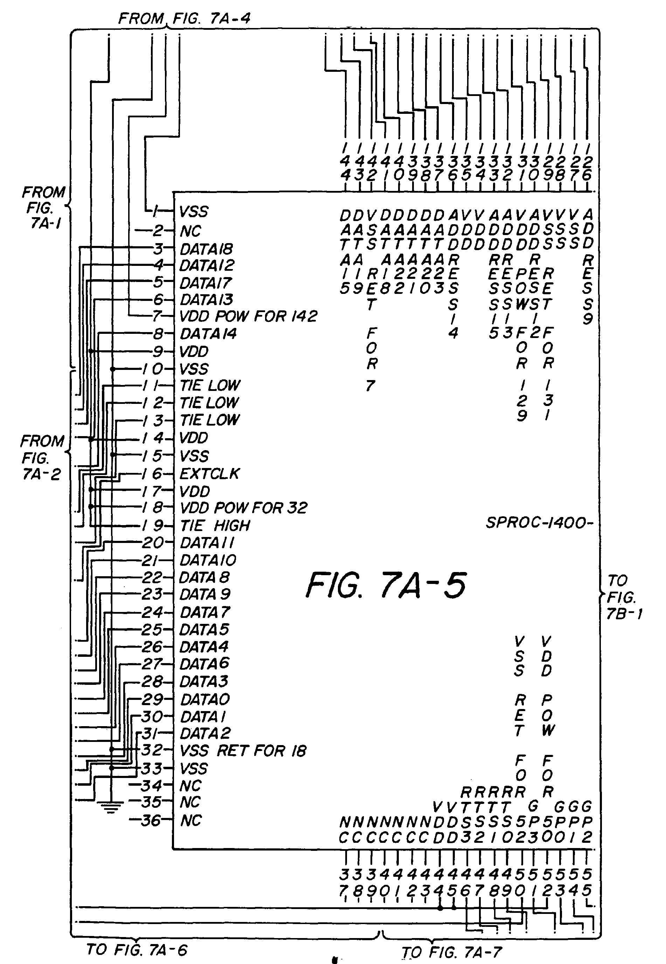

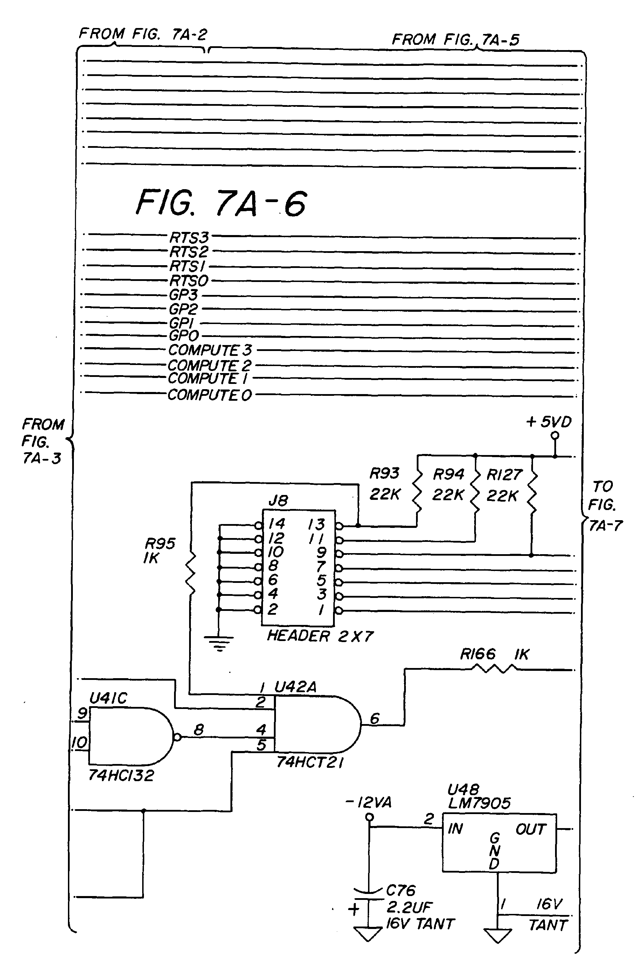

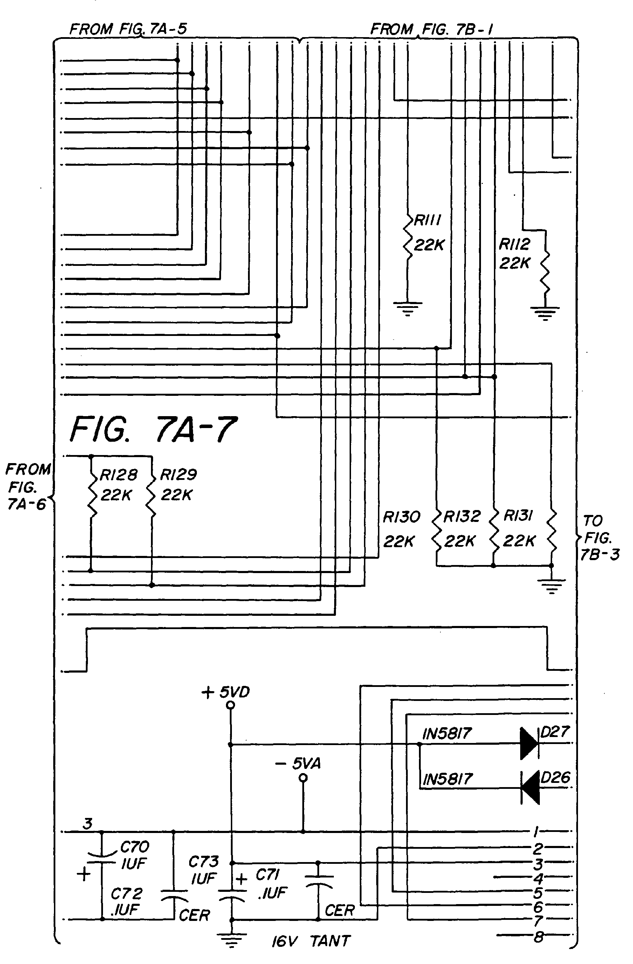

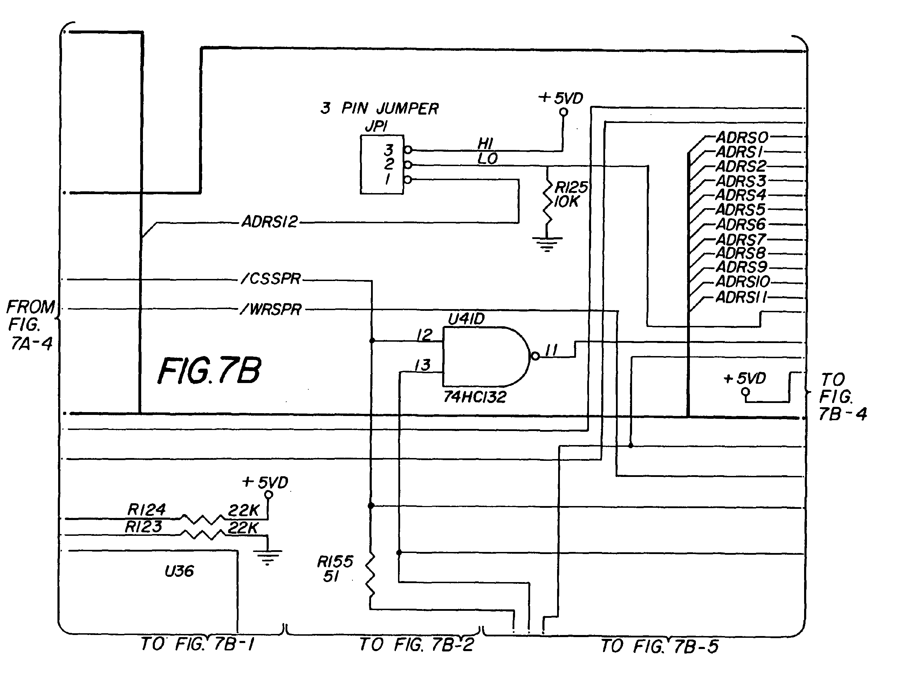

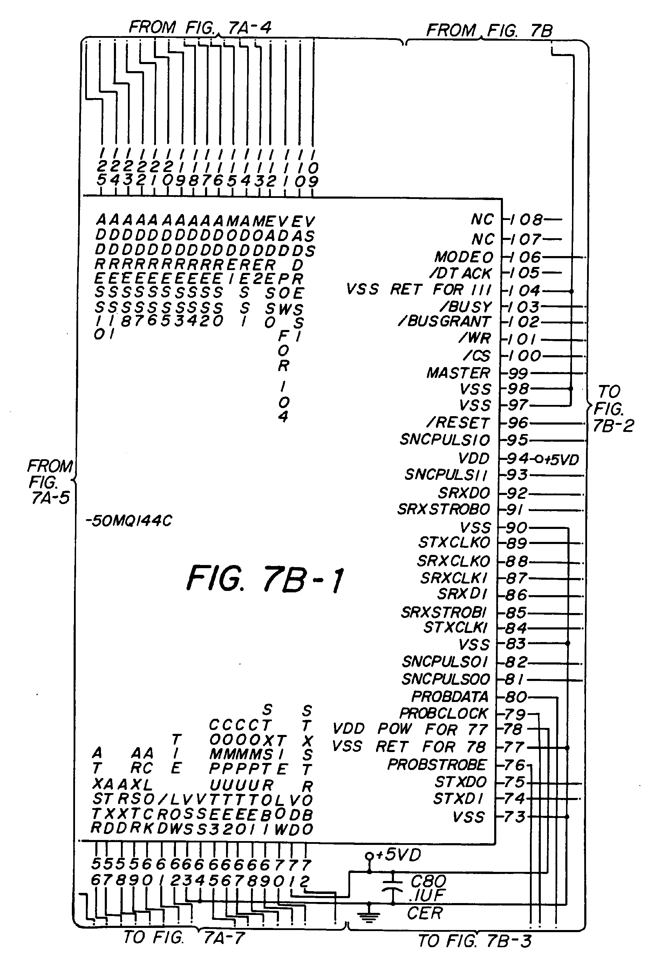

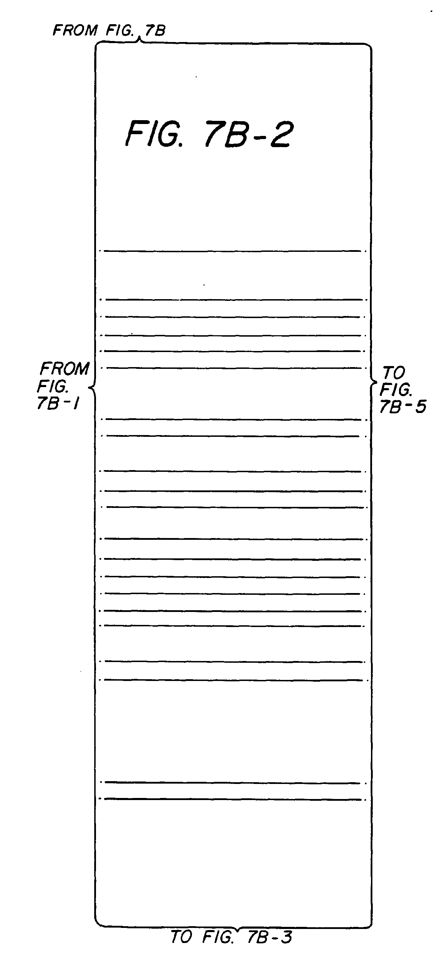

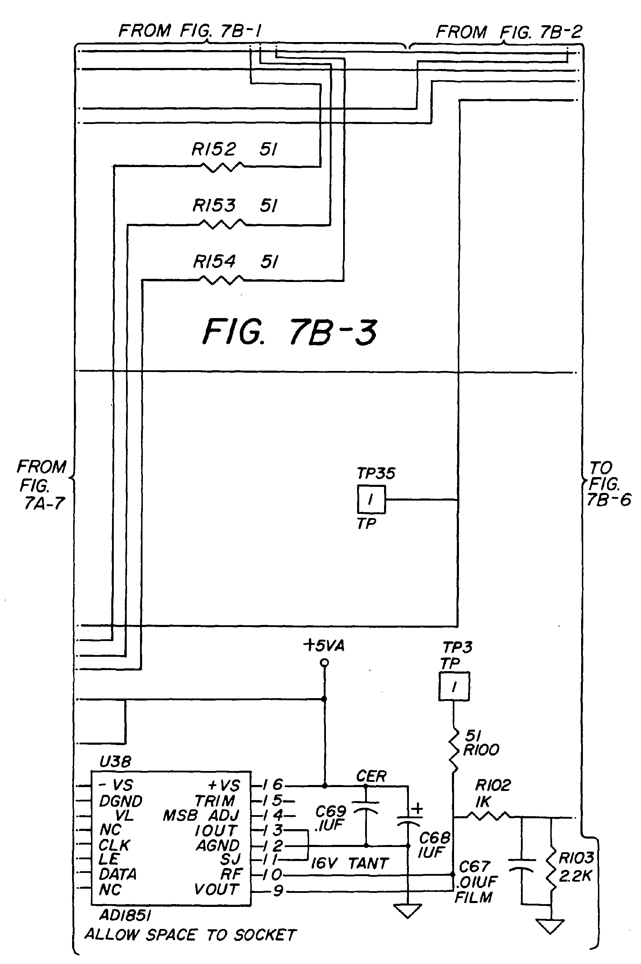

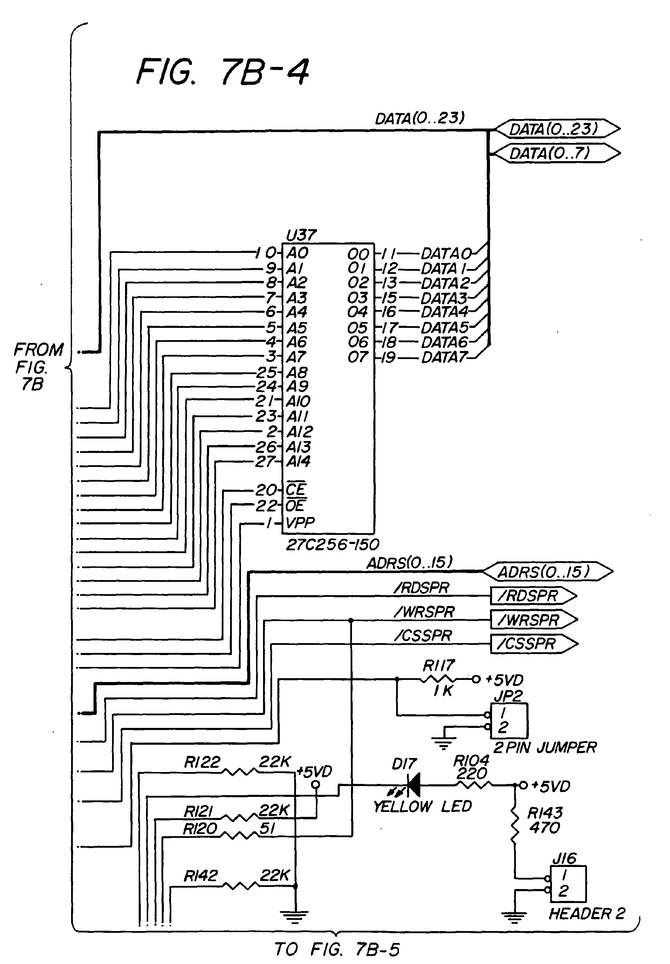

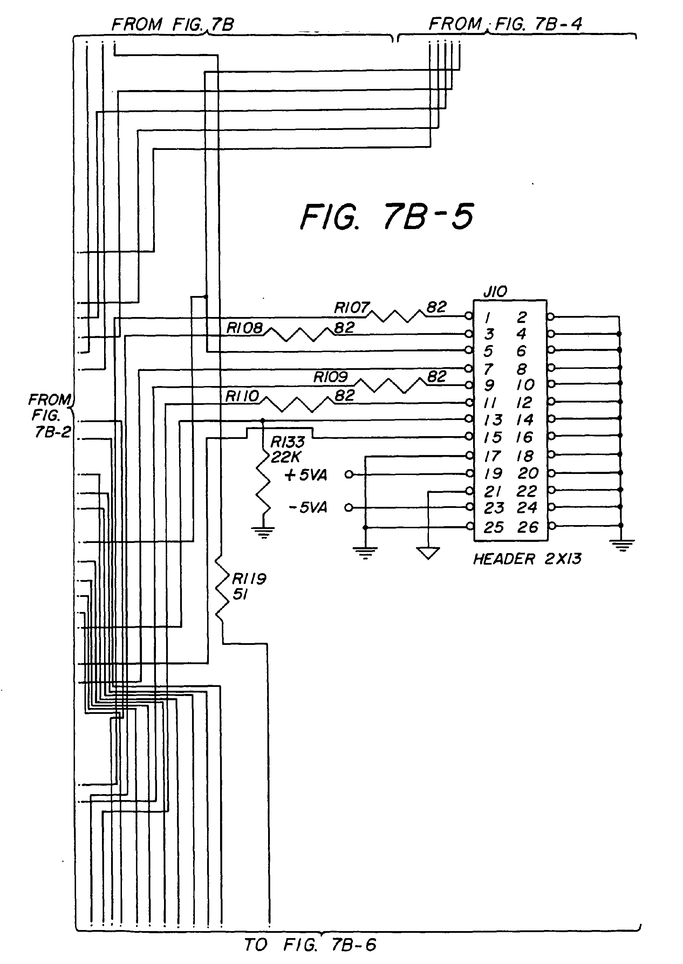

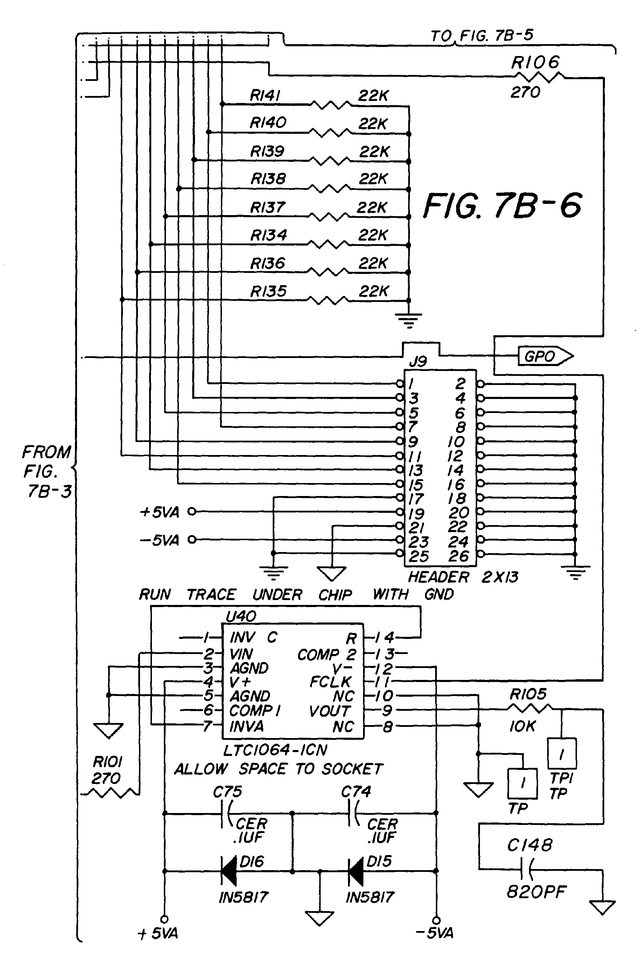

**Figure 7A and 7B** comprise left and right hand portions of the second sheet of schematic drawings of the preferred embodiment of the invention. This sheet shows the SPROC^{tm}-1400 DSP processor manufactured by Star Semiconductor of San Jose, CA. which may be purchased from distributors of Star Semiconductor products, or from Pixel Instruments Corporation of Los Gatos, CA. SPROC is a trademark of Star Semiconductor. The SPROC chip performs the bulk of the actual processing of the sampled video to determine the delay of the delayed video at BNC connectors J3 and J4 and the non-delayed video at BNC connectors J1 and J2. The circuit operates to measure the time delay from one vertical sync to the other (fine delay), and to determine a coarse delay by matching the undelayed fields to the delayed fields. The coarse delay, determines the delay in field delay units and then adds to it the fine delay from one sync to the other.

This circuit shown in Figures 7A and 7B is virtually identical to the SPROC evaluation board circuit which is manufactured by Star Semiconductor, and will operate in this mode as well as in the preferred embodiment. These boards are available from distributors of Star Semiconductor Products, and for a more thorough description of the circuit, one may refer to the various literature available from Star distributors.

The functions of various key components include U36 in the middle, the SPROC IC, U39 and U41 in the lower left, the reset circuit for generating reset commands upon power up or after leaving a failure mode, U38 and U40 at the bottom of Figure 7B, a D-A and Low pass filter ICs which may be used for troubleshooting and further development, but not necessary to the basic operation, Headers J7 & J8 at the bottom of Figure 7A, and J9 and J10 on the right of Figure 7B, also used for troubleshooting and further development. U47 at the upper left of Figure 7A provides 50MHz clocks for the SPROC and other system components, U44, 45 and 46 count the 50 MHz clock down to other frequencies needed by the system. Jumper JP2 selects master or slave mode for U36, and this jumper is always omitted since the SPROC always operates in the master mode. Communications between U36 and peripheral devices takes place via the SPROC parallel port. This port consists of 16 bit address bus ADRS[0...15], and 24 bit data bus DATA[0...23], chip select /CSSPR, write assert /WRSPR, and read assert /RDSPR. These signals allow bidirectional 24, 16 or 8 bit parallel data transfer. RTS0 thru RTS3 are one bit input lines. GP0 through GP3 are one bit input or output lines.

Upon power-up, watchdog timer U39 resets U36. When U36 comes out of reset, an internal bootstrap routine loads the SPROC program from EPROM U37 into internal RAM. Two programs may be stored in U37, selected by JP1. Normally, the "LO" position is used. When program loading is complete, execution begins. Execution is triggered by a 9765.625 Hz (10MHz/1024) square wave applied to U36 pin 67 (COMPUTE0). This forms the effective DSP "sample rate". This trigger signal is generated from the 50MHz clock. While one of ordinary skill in the art will be able from the teachings herein to generate the program for U37 by use of Star's SPROC development system, The program in Motorola S-Record code for the preferred embodiment as stored in U37 was published in WO 96/11550.

J8 is the access port connector. J8 allows communication with the SPROC via a suitable external development system. DAC U38 provides an analog representation of the internal SPROC registers for use with such development system. J7 provides access to the RTS, GPIO and COMPUTE lines. J9 and J10 provide access to the SPROC serial output and serial input ports. J7, J9 and J10 also provide access to the SPROC. None of the above are utilized in normal operation, but are available for enhancements and further development.

U43 is a watchdog PLD which in conjunction with U39 looks for the absence of certain address and data combinations to constantly monitor the operation of the SPROC to help ensure that it does not hang up. If a required combination is absent, U39 times out and U43 initiates a reset of the SPROC. While one skilled in the art will be able to program PLD U43 from the teachings herein, the program for the preferred embodiment was published in WO 96/11550.

**Figure 8A and 8B** comprise left and right hand portions of the third sheet of schematic drawings of the preferred embodiment of the invention. This circuit shows the A-D convertors for sampling the delayed and undelayed video from Figure 6, FIFO and control logic for temporarily storing and supplying the digital samples to the SPROC, and PLL sync generators for providing various timing signals which are phase locked to the video and which allow sampling at known locations, for example within a circle as previously suggested. There are two very similar video A-D and PLL circuits occupying the upper and lower portions of these sheets of schematics. The upper portion will be described in detail and one skilled in the art will understand the lower portion from the description thereof.

Video is coupled to pin 19 of A-D convertor U4. Sampling clock is coupled to pin 12, and the A-D provides an 8 bit digital word corresponding to the sample at the data outputs on pins 3-10. The digital sample is written into a FIFO memory U6 where it is temporarily stored until it is read out on to the SPROC data bus to be transferred to the SPROC chip for processing.

Composite sync which has been separated from the video is coupled to PLL sync generator IC U3 on pin 11. U3 contains all PLL components to phase lock an oscillator on pins 5 & 6 to the comp sync signal, and provide a full compliment of phase locked video timing signals at its output. Of particular interest are clock output on pin 24, horizontal drive pin 22, vertical drive pin 21, and comp blanking on pin 17. These timing signals are coupled to Programmable Array Logic ICs U5 and U7 which provide control signals to the A-D, FIFO, SPROC, etc. in order to control the taking of samples of video and transferring those samples to the SPROC. ICs U5 and U7 utilize counters to count clocks and horizontal pulses in order to take samples at predetermined locations on the image. While one of ordinary skill in the art will be able to program PLDs U5 and U16, U7 and U18 the programs for the preferred embodiment is published in WO 96/11550.

It may be noted that U5 and U16 differ only in the decoding of the SPROC address bit ADRS0 so that the SPROC may individually read data from the delayed and undelayed channel.

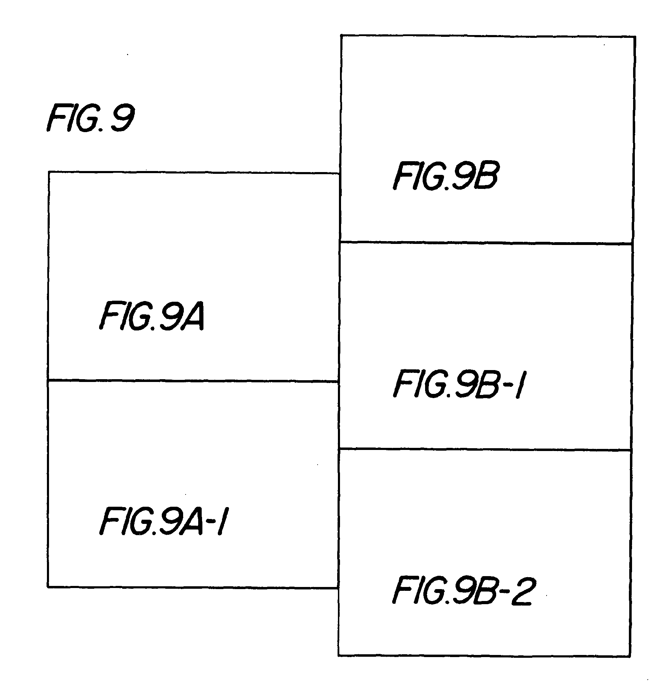

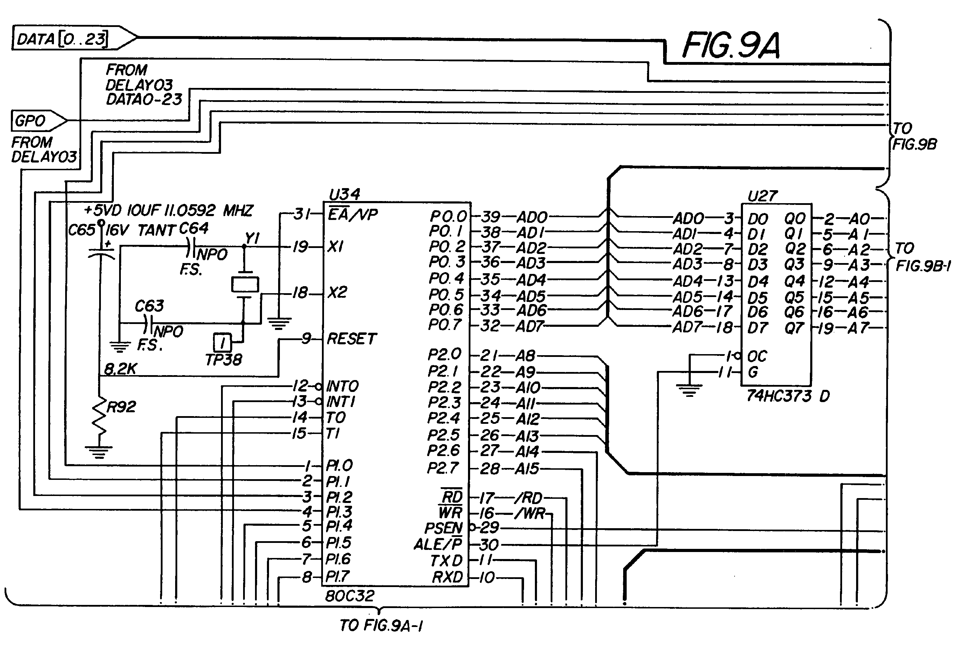

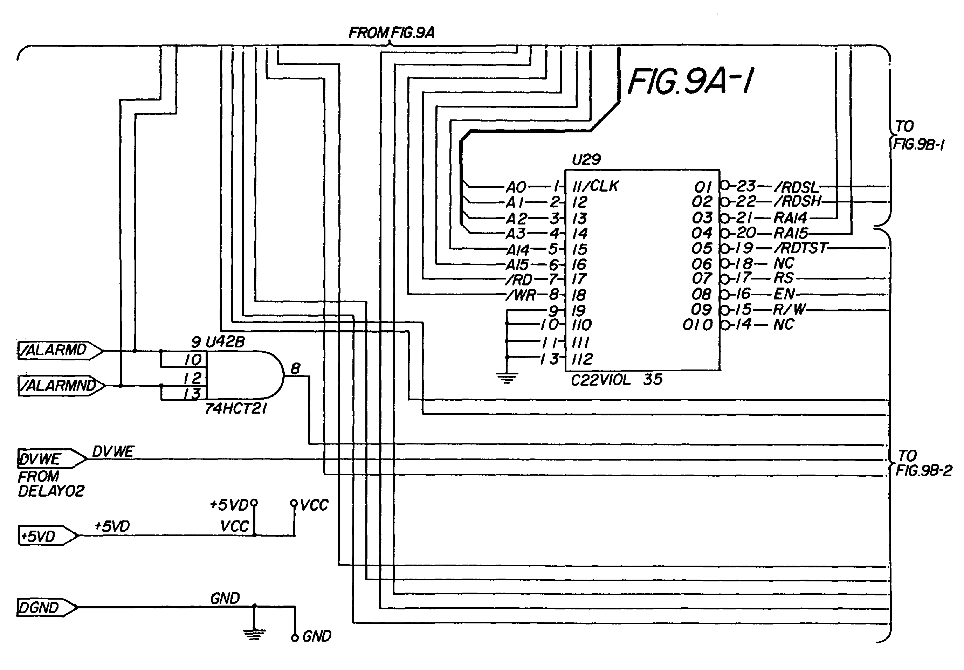

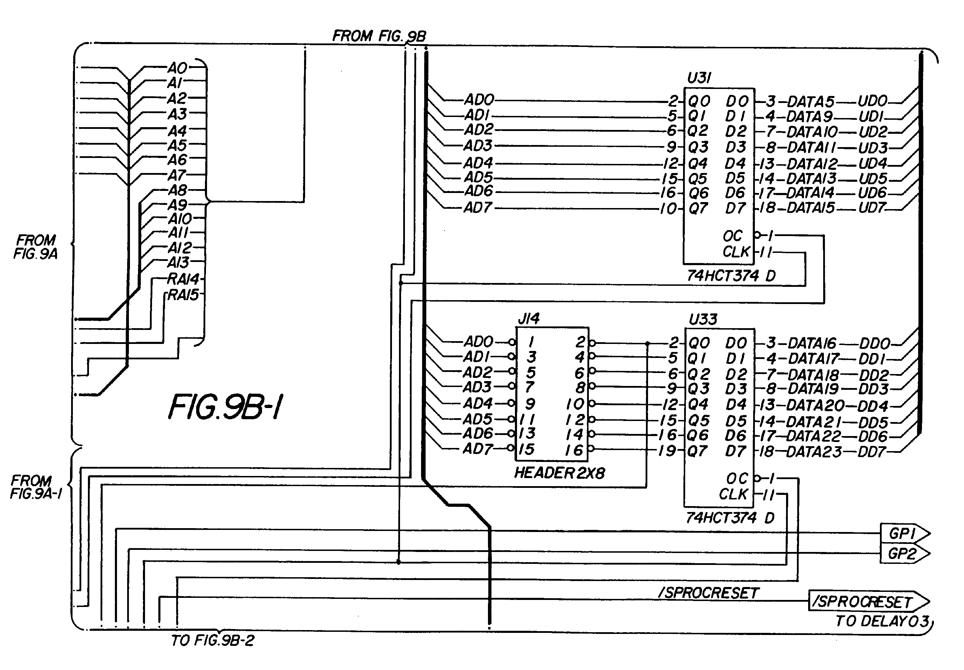

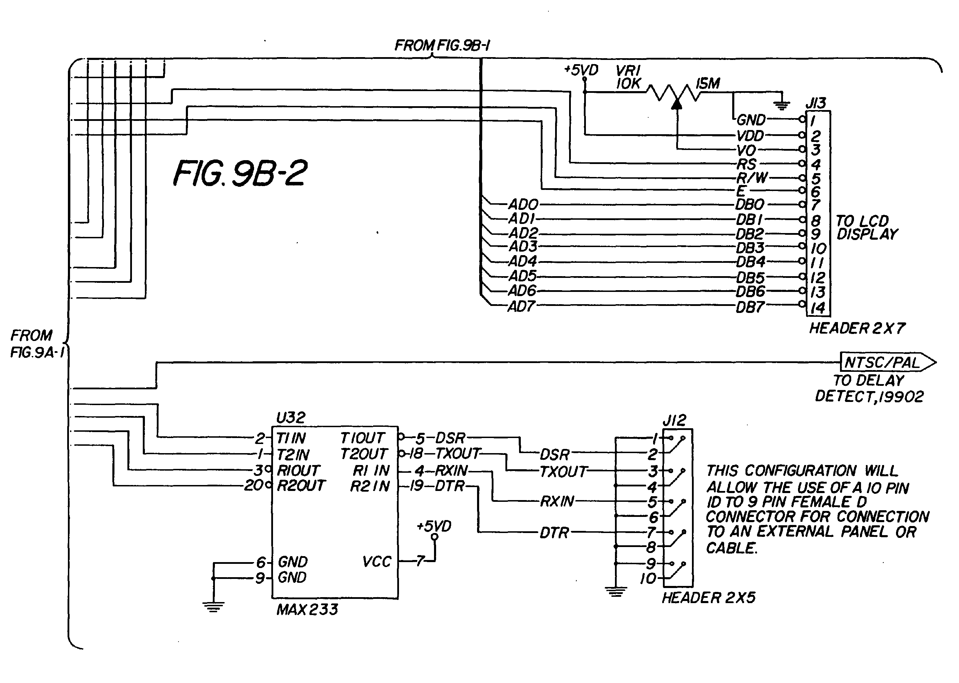

The PLL sync generator IC additionally has control inputs X, Y and Z on pins 25-27 which can switch the part from NTSC to PAL operation under operator control, via Jumper JP20. The selection of NTSC or PAL operation is also coupled to the microprocessor on Figure 9A.

The analog error voltage from the PLL of sync generator U3 is buffered by U2D and coupled to the window comparator U20 and U21 of Figure 6B to generate the alarm signal in the event of loss of lock (which results in large error voltage excursions) as previously described.

Dip switch S1 on the right side of 8B is set by the operator to signify the maximum delay which the video signal may experience. For example, if the delay detector is utilized with an 8 field frame synchronizer, the switch is set to a binary 8 to signal the SPROC not to attempt to match any delay over this amount. This maximum delay setting is coupled to the SPROC bus by tri-state buffer U11 in response to a read command from the SPROC as decoded by U5. Switch 1 is the MSB and an on position corresponds to a one.In operation, nine active video pixels are taken from each of seven video lines of each field, the seven lines being spaced 35 lines apart for NTSC and 42 lines apart for PAL. The samples are stored in the FIFO until all samples for a line are ready, and then PAL U7 outputs a FIFO data ready flag (RTS1) to SPROC. SPROC then reads the data for that line and clears the flag. In addition, PAL U5 outputs a field flag (RTS0) to SPROC. SPROC in turn writes a clear to U5 to clear the field flag. In this fashion, SPROC receives both sample data from known lines and field flags from each input video signal.

It should be noted that VR3 is not normally installed. This adjustment is used to match the phase of the sampling of the non-delayed PLL to match the phase of the sampling of the delayed PLL so that the first sample of the line is taken from the same position on the line. In practice it has been found that the PLLs match quite nicely and such adjustment is unnecessary.

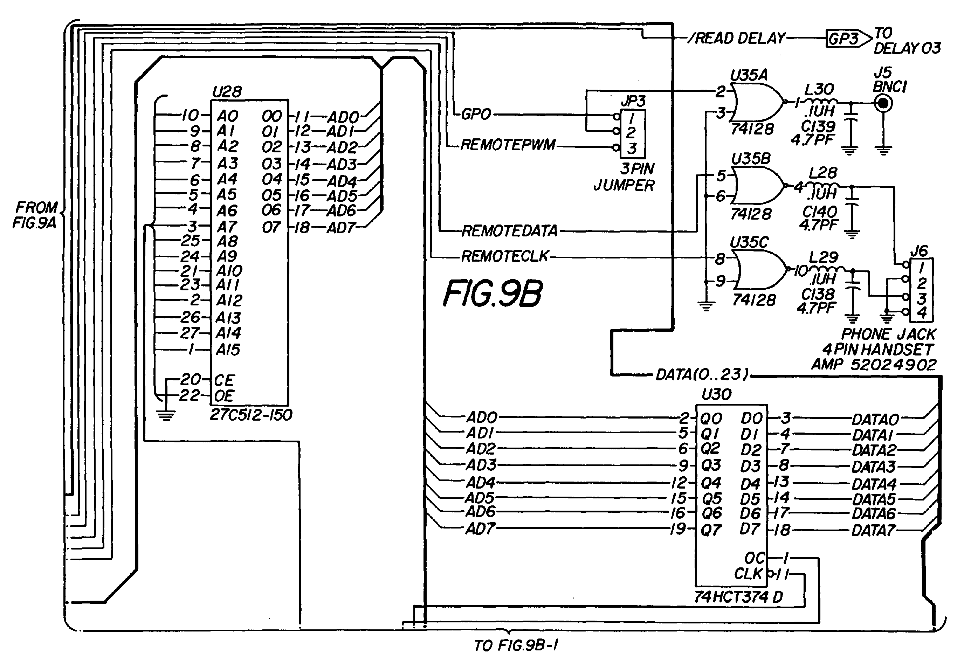

**Figure 9A and 9B** comprise left and right hand portions of the fourth sheet of schematic drawings of the preferred embodiment of the invention. This sheet of schematics shows the control and operator interface microprocessor. The 80C32 general purpose microcontroller (microprocessor) U34 operates to receive information from the SPROC and the two alarms and provides delay information output via pulse output J5, serial data output J6 and to a LCD display via J13. The LCD display is manufactured by Optrex, part number DMC20261NYLYB. This component, as well as all of the other components of Figures 6-9 are available from numerous electronics component distributors, and one of ordinary skill in the art will be able to easily procure these parts.

EPROM U28 stores the operating instructions (program) for U34 and latches U27, U30, U31 and U33 operate to latch data and transfer it to and from the U34 data and address bus under control of Programmable Array Logic IC U29. While one of ordinary skill in the art will be capable of generating a suitable program for U29, the JEDEC file for U28 for the preferred embodiment of the invention was published in WO 96/11550.

U29 decodes reading and writing requests from U34, thus providing the necessary enabling controls for the various input and output registers and devices.

The program for the operation of U34 is stored in EPROM U28 and is read at appropriate times in cooperation with U29. While one of ordinary skill in the art will be capable of generating a suitable program for U34, the EPROM code for U28 for the program for the preferred embodiment of the invention was published in WO 96/11550.

Data interface to SPROC occurs via bus DATA[0...23] with latches U30, U31 and U33 storing data from SPROC and then transferring the data to U34 at the appropriate time. An external monitoring device or other control may be coupled to the microcontroller via an RS-232 type serial port provided by U32 and J12 to implement additional features and operations.

The controller section reads the measured delay data from the SPROC and converts this data to the aforementioned output formats, as well as displaying the messages on the LCD control panel. U34 requests parallel delay data from the SPROC, the SPROC then writes data to registers for use by the micro. Video alarms /ALARMND and /ALARMD are also read, and in addition the micro reads line GP1 from the SPROC to indicate a new delay update. The micro generates delay, alarm and update information to the LCD and also calculates and displays the elapsed time since the last update.

Line driver U35A buffers the TTL pulse and outputs it to J5. Line drivers U35B and U35C buffer the serial remote data and clock from U34 and outputs these signals via J6. These serial signals convey the delay amount in binary code and may be utilized by other processing equipment.

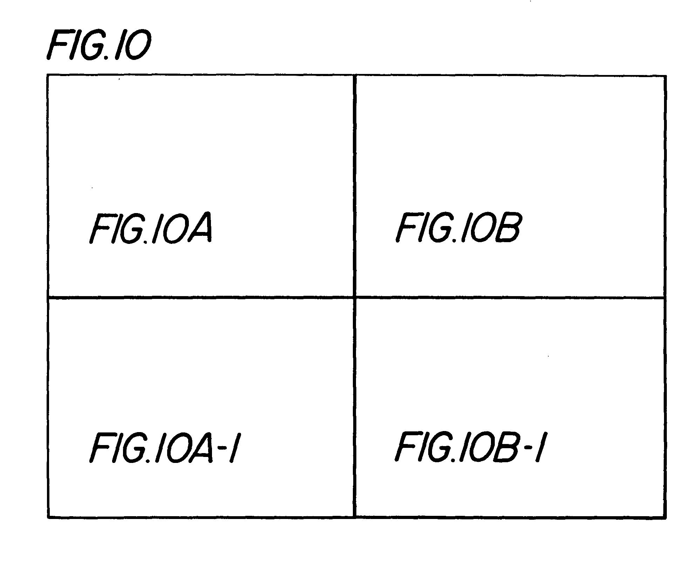

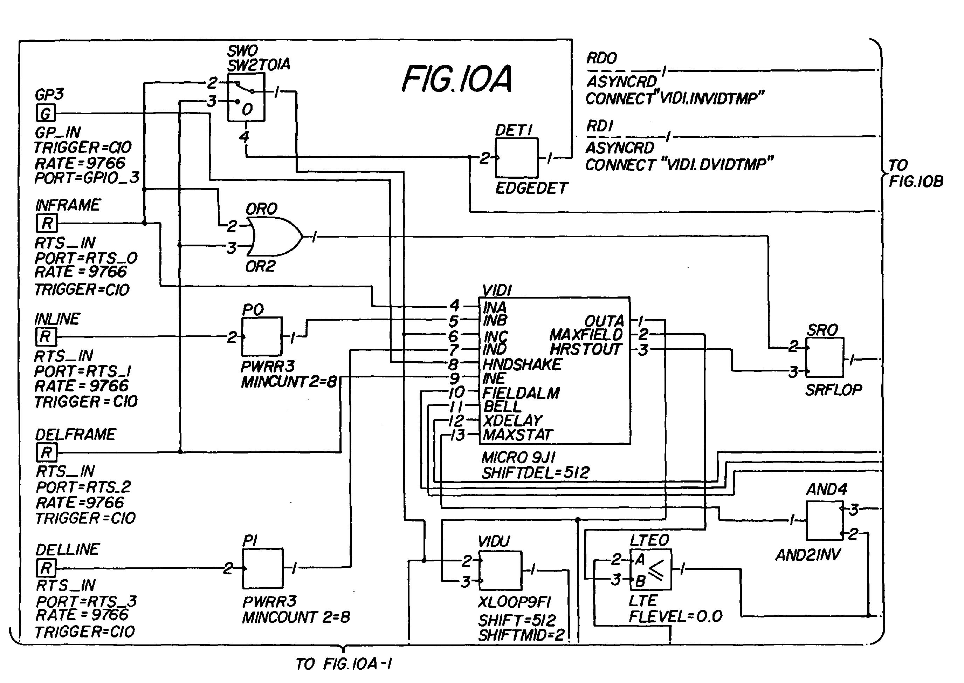

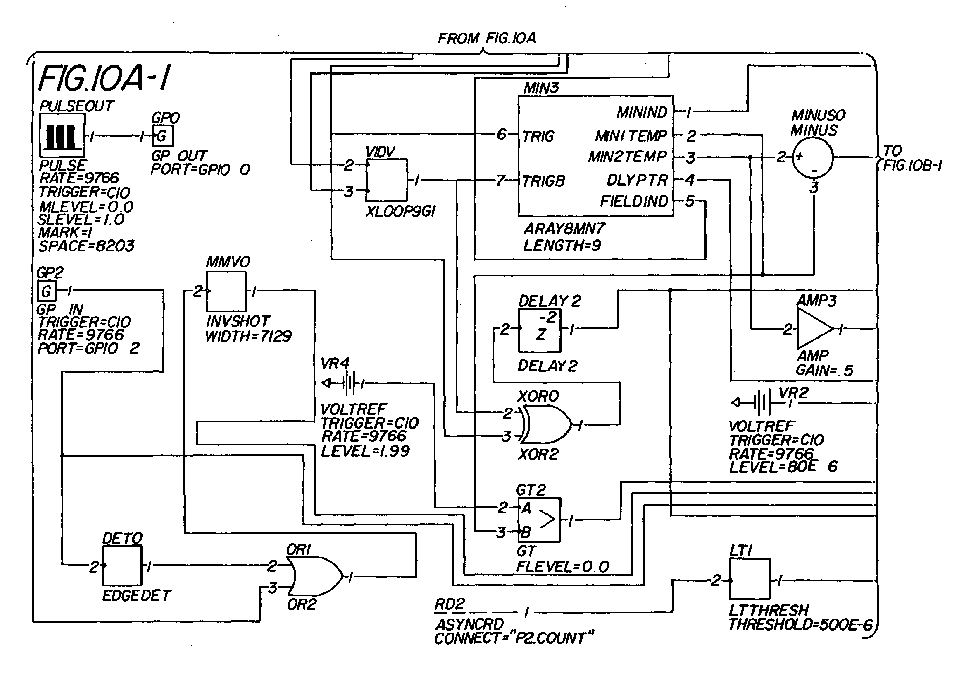

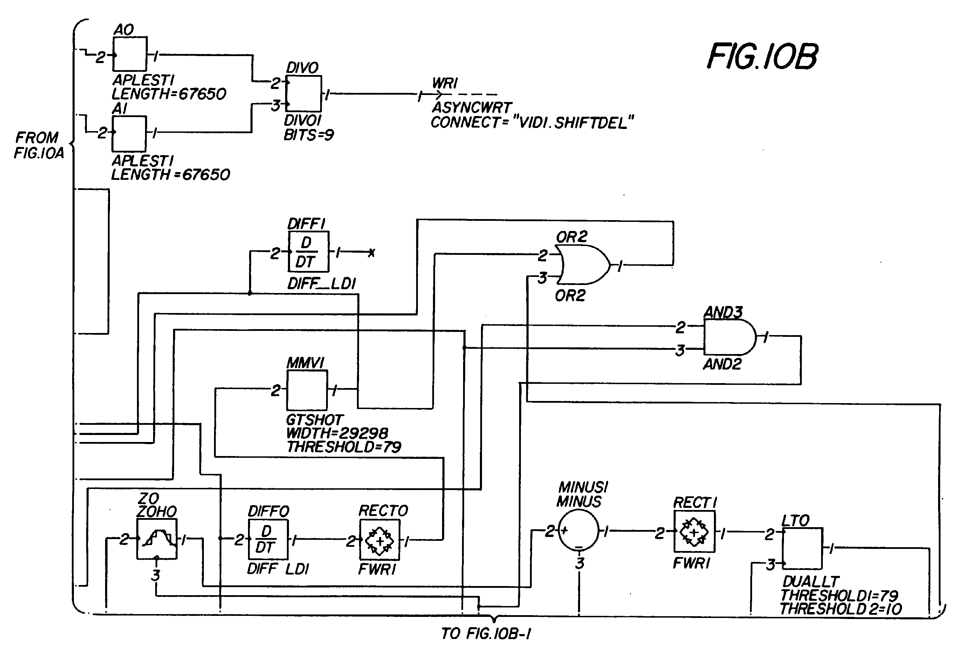

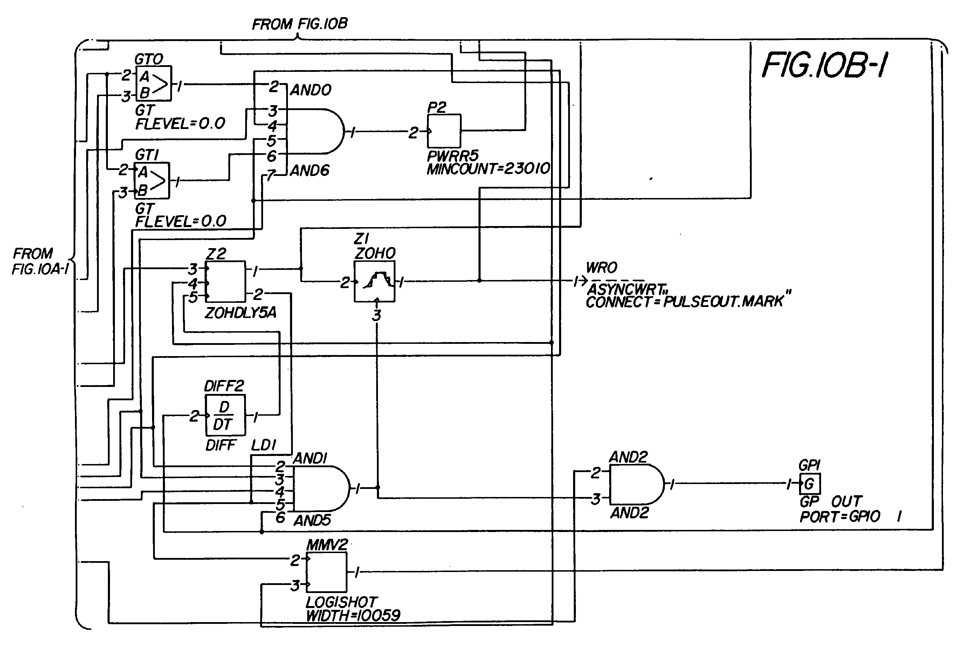

**Figure 10,** comprised of sheets 10A and 10B is a graphical representation of the operation of the SPROC DSP IC in the preferred embodiment of the invention. Several novel features of the preferred embodiment will now be described in some detail with respect to this graphical representation with each block (or "cell") representing the hardware operation caused to be implemented in the SPROC by a segment of code stored in the U37 EPROM.

Cell VID1 is the main timing and control cell. Also embedded within VID1 are all parallel port bus reads and writes. VID1 obtains non-delayed field, non-delayed line, delayed field, and delayed line flags from cells INFRAME, INLINE, DELFRAME, and DELLINE, respectively. These latter four cells read the hardware lines RTS0 through RTS3, respectively. Cells P0 and P1 remove double-clocking (resulting from the asynchronous relationship between the COMPUTE0 clock and the video H rate) from the line flags.

Processing operates on an 18 field cycle. This is preferred since it accommodates an 8 field delay which is the maximum expected from a large percentage of equipment in use today, however other cycle lengths can be implemented as well from the teachings herein. VID1 numbers non-delayed fields 1 through 18. Delayed fields are also numbered 1 through 18, beginning with the first delayed field flag coincident with or lagging the first non-delayed field flag. VID1 counts and stores the delay of each delayed field relative to non-delayed field one.

At each flag from cell INLINE, VID1 begins reading and storing the nine 8 bit pixels from that indicated line, via the parallel port. Sample accuracies other than 8 bits may be utilized as well. Nine pixels from seven lines from 18 fields, totaling 1134 points, are stored in the SPROC internal 24 bit word-width data RAM, although other numbers of samples may be used as well. The data is packed three bytes to a word, so 378 RAM locations are used. At each flag from cell DELLINE, VID1 begins reading the nine 8 bit pixels from that indicated line. As outlined more fully below, a novel operation whereby each delayed video pixel is processed and discarded before the next one is used, although this is a particular design implementation and other ways of performing the required tasks will be apparent to one of ordinary skill in the art from the teachings herein.

The hardware resets the line flags in response to pixel read activity. VID1 resets the field flags by writing specific locations with the parallel port. VID1 reads the Maximum Expected Delay DIP Switch, and makes that data available. VID1 outputs the measured delay number to the microcontroller registers. Diagnostic indicators are also output, to a separate register.

It is called to attention that delay counting errors can result from the asynchronous relationship between the COMPUTE clock and the video rates, when the non-delayed and delayed fields are close to alignment. This is especially true if there is some jitter on one video or the other. Hysteresis is preferred to be used to prevent this problem occurrence, although other methods of prevention may be used as well. Cell ORO detects simultaneous field flags, and sets flip-flop SRO. SRO controls switch SW0, and causes both field flags to be taken from the non-delayed video. This persists until counters in VID1 detect a minimum of +/-2 count difference between the two actual field flags, at which point SRO is reset. Thus, a maximum hysteresis magnitude of one count is suggested to be used, but other counts may also be utilized.

Cell VIDU performs correlation. Each data point (sample) from Delayed Field 1 is subtracted from it's counterpart from Non-Delayed Field 1. The result is squared, (this effectively removes the sign as could be done by taking the absolute value or other method) and accumulated in the zeroeth error vector location. Other comparisons of samples may be performed as well and although the correlation described is a particularly efficient implementation of the comparison, other ways of performing this comparison of the samples or even of the images will be apparent to one of ordinary skill in the art from the teachings herein, and may be resorted to meet particular needs for specific applications of the invention.

Delayed Fields 2 through 10 data is also correlated with Non-Delayed Fields 2 through 10 respectively, and the results accumulated in the error vector zero location (vector zero is the first vector). Each data point from Non-Delayed Field 1 is similarly correlated with it's image location counterpart from Delayed Field 2, 3, etc. for all possible delay positions and the results accumulated to the appropriate error vector location, for example samples from Non-Delayed field 1 through 10 are compared to Delayed 2 through 11 and are accumulated in the error vector one location (error vector 1 is the second vector). This process of comparing each sample with its corresponding samples continues until the samples of Delayed Fields 9 through 18 are correlated respectively with Non-Delayed Field 1 through 10, and the results accumulated in the eighth error vector location. All correlation associated with a given delayed pixel is performed immediately upon receipt of each delayed pixel, so that storage of an array of delayed pixels is not required and only the undelayed samples are stored. The reverse may of course be performed if desired. In the preferred embodiment it is chosen that 8.99 fields is the maximum measurable delay, so no correlation is performed more than eight field numbers apart. In addition, error vector accumulators are reset to zero before the beginning of each cycle. Therefore, each of the nine error vector locations represents the same number of accumulated squared-difference points. Other lengths may be chosen as well and although this is a particularly novel and efficient design implementation, other ways of performing the required tasks will be apparent to one of ordinary skill in the art from the teachings herein.

When program material motion or scene changes are present, the error vector location with the smallest accumulated result will tend to indicate the delay in numbers of fields. This occurrence was previously described with respect to Figure 3, and cell VIDV performs a similar comparison function to that described. It operates on Non-Delayed Fields 10 through 18, plus Non-Delayed Field 1 from the next cycle, and Delayed Fields 10 through 18 of the current cycle, plus Delayed Fields 1 through 9 of the next cycle. Results are accumulated to a separate error vector.

VID1 resets the field counters at the first field after field 18, and the 18 field cycle repeats. Thus, two independent overlapping correlation operations occur for each 18 field cycle. This effectively results in a continuous correlation operation, so that even isolated scene change events may always present a measurement opportunity.

VIDU and VIDV alternately complete correlation operations at nine field intervals. At each completion, a trigger pulse is sent to cell MIN3. MIN3 sorts the appropriate error vector, and determines the values of the lowest and next lowest result. The error vector represents the match between fields for a particular given delay, a low error indicating a good match. A valid raw measurement (that is to the nearest field) is deemed to have occurred if the lowest result is below a known threshold, and the next lowest result is sufficiently removed by a known amount, as determined by cells MINUS0, AMP3, GT0, GT1, GT2, VR2, and VR4. Such operation has proven to provide a high degree of immunity to false triggering while maintaining efficient responsiveness to legitimate matches. If the above criteria are met, cell AND0 passes the trigger pulse coming from either VIDV or VIDU by way of XOR0 and DELAY2. Cell P2, connected to AND0's output, enforces a minimum of 2.4 seconds time diversity between raw measurements, ensuring that one abrupt burst of undesired events, for example noise, do not overload the correlation and cause a false reading. The trigger pulse, if passed by P2, increments the five-deep indicated delay vector location stack contained in cell Z2. If all five locations in the stack are the same, indicating five such events, Z2 enables an update of Z1 via cell AND1. Z1, a zero order hold, stores the output delay number contained in the indicated delay vector location.

The threshold and time diversity criteria applied to the raw measurements are a novel solution required to offset non-ideal characteristics observed in some typical video delay mechanisms. A certain degree of non-correlation between successive fields is required to exceed the resultant threshold settings. An abrupt scene change, as opposed to a fading scene change, rapid motion within a scene, or an abrupt brightness change within a scene, may be required to produce an allowed raw measurement.

Measurements are subject to some additional conditions. Z0 stores the most recent raw measurement delay number. An update of Z1 is prevented by MINUS1, RECT1, LT0, and AND1, if it would mean a difference between Z0 and Z1 outputs outside the range of -79 to +78 counts. Without this provision, if the first raw measurement after the non-delayed and delayed fields rolled through alignment (necessitating field re-acquisition) was in error, a one field error in Z1 output could result. The output of LT0 is high to enable a Z1 update, low to inhibit a Z1 update. In effect, when the fields are coincident, followed by non-coincidence, it is highly probable that the delay has changed by a one field increment, owing to hysteresis operation in the video device where a field is repeated or dropped. In order to speed acquisition of the new delay measurement, it is desirable to change the measurement parameters such as thresholds and time diversity criteria. It is also desirable to change these parameters in order to decrease false measurements for signals having lots of measurement opportunities and to increase the frequency of measurements for signals having few opportunities.

If the raw indicated delay vector location exceeds that allowed by the Maximum Expected Delay DIP Switch, as determined by cell LTEO, a raw measurement is disabled. In addition, cell AND4 output is asserted. This causes VID1 to transfer a status bit to the microcontroller, indicating a raw measurement attempt beyond the maximum set by the maximum expected delay switch. Raw measurements and Z1 updates are disabled by any alarm condition, since the loss of either sync or the loss of lock of either PLL indicates invalid samples are being taken. It is thus wise to disable updates and to hold the last known good delay value until new valid samples and correlations can be made. Cell GP2 detects a summary alarm condition as presented by the hardware. A static alarm here will disable the outputs of both AND0 and AND1. A transient alarm, as detected by edge detector DET0, will cause monostable multivibrator MMV0 to disable AND0 and AND1 outputs for 730mS (36.5 PAL B/G fields), allowing possibly suspect data to be flushed from any correlation. OR1 combines one other transient alarm. A change in hysteresis status, as detected by DET1, and passed through OR1 will also fire MMVO.

If MMV0's output is active, an update of Z1 is prevented by MINUS1, RECT1, LT0, and AND1, if it would mean a difference between Z0 and Z1 outputs outside the range of -10 to +9 counts. A transition of LT0's output to the active low state is detected by first-difference cell DIFF2, and causes Z2 to partially reset the stack. After this partial reset, a minimum of four new raw measurements are required to enable a new Z1 update. Cell GP1, configured as an output, flags an update event (or attempt, in the case of the maximum expected delay field being exceeded) to the microcontroller. The signal to GP1 is gated by AND2 and LT1. LT1 compares the count of timer P2. A low count on P2, in conjunction with a true signal level from AND1, indicates an update.

Cells MMV2, DIFF0, RECT0, MMV1, OR2, and DIFF1, are used for diagnostics only, and perform no role during normal service of the preferred embodiment, and are available to implement suggested alternative operations.

Cell A0 produces a lowpass filtered estimate of non-delayed video average picture level. Cell A1 performs the same operation on delayed video. A ratio of non-delayed to delayed video APL estimates is output from divider cell DIVO. This ratio is fed back to VID1, where it is used to scale the delayed sample values before correlation. This scaling improves correlation quality when the non-delayed and delayed video input picture levels differ. It will not correct non-linear distortion such as compression or differences in video setup levels. These problems could be handled however with minimal changes to the operation should it be expected that such problems would occur. The changes to the SPROC operation necessary to implement these improvements will be readily understood and easily performed by one skilled in the art from the teachings herein. For example, offset errors may be simply detected by inspecting the lowest value, corresponding to black, of the two sets of samples, and corrected by adding the error to the lower. Nonlinear errors may be detected by comparing samples at various levels, for example black, gray and white, from a given frame of the delayed signal to the same frame of the undelayed signal. Once the black and white levels are caused to be corrected, the difference in the gray level would correspond to the nonlinear error. This can be corrected by multiplying the samples with a gamma correction function as is well known in the art. Alternatively, a lookup table may be created from the detected nonlinearity and utilized for correction, also as is well known in the art. Even without such correlations, the present embodiment tolerates a good amount of non-linear distortion without significant decrease in performance.

Z1's output is supplied to VID1 for parallel port output to the microcontroller. Cell GP3 reads a handshaking control line from the microcontroller.

Cells PULSEOUT and GP0 output the signal used to form the DDO, the Delay Detector Output. DDO is a standard method of communicating delays via a periodic pulse whose width is changed to match the delay. The active low true level duration of PULSEOUT is determined by the output from Z1. PULSEOUT duration quantization is the inverse of the sample rate, or 102.4 microseconds, with a minimum duration of 102.4 microseconds.

When the preferred programs are used to operate the device of the schematic Figures 6-9, the preferred embodiment of the invention operates with many novel and useful features. The operation of the preferred embodiment is described below.

The preferred embodiment measures the delay between a video source and a delayed version of the video source. The measurement, along with certain status indicators, is presented on a LCD display. Additionally, DDO pulse and serial data delay outputs are available. The DDO pulse or serial data outputs may be directly used to control the desired delay of the Pixel AD2100 Audio Delay Synchronizer. A delay of between 0 and 8 fields may be measured.

In operation, non-delayed video and delayed video are input to the preferred embodiment via high-impedance loop-through connectors. Vertical sync is counted to establish candidate delays for 0 through 8 fields. Delay is counted to a nominal resolution of 102.4 microseconds (1024/10MHz). Sixty-three pixels from each field of both video signals are digitized, and a correlation is performed. Under conditions of significant motion or scene changes, correlation differences between fields are used to select the most likely of the candidate fields. Redundant time-diversified measurements are performed to reduce the incidence of measurement errors.

The above described operation is normally used, as selected by jumpering JP1 pins 1 and 2 of Figure 7B together. An alternative operation may be selected by jumpering JP1 pins 2 and 3 together. This latter operation is identical to the one described above, except for two parameters. Parameter P2.mincount2 is changed to 58571 from 23010. This increases the minimum time diversity between raw measurements from 2.4 to 6 seconds. Parameter VR2.level is changed to 477E-6 from 80E-6. This increases the minimum difference required, between the lowest and next lowest correlation error results from MIN3, to produce a valid raw measurement.The following signal connections are shown on the schematics Figures 6-9. This section describes the signal connectors and their functions.

NON-DELAYED VIDEO INPUT: Two BNC female connectors, J1 and J2 of Figure 6A for high impedance loop through. The non-delayed video source should be connected here.

DELAYED VIDEO INPUT: Two BNC female connectors, J3 and J4 of Figure 6B for high impedance loop through. The delayed video source should be connected here.

DDO PULSE OUT: A BNC female connector, J5 of Figure 9B which outputs a periodic rectangular waveform, with high period equal to measured delay. This may be connected to a companion audio delay for correction of the lip sync error in television systems, for example the REMOTE DELAY connector on the Pixel Instruments Corporation of Los Gatos, CA. AD2100 audio synchronizer. This connection will allow remote pulse width control of the AD2100 to perform appropriate matching audio delay.

SERIAL OUT: A modular handset connector, J6 of Figure 9B which outputs serial measured delay data. This may be connected to a companion audio delay for correction of the lip sync error in television systems, for example the SERIAL IN connector on the Pixel Instruments Corporation AD2100 audio synchronizer. This connection will also allow serial data remote control of the AD2100 if desired.

MAXIMUM EXPECTED DELAY DIP SWITCH: This switch, located on Figure 8B, is used to limit the range of correlation measurements. The maximum expected delay in fields is selected as a four bit binary number. The valid range is 1 to 8 fields. Measurements beyond the setting are ignored. Please see the "Setup and Adjustment" section for more information.

LCD DISPLAY: A backlit LCD display is utilized which displays 2 lines of 20 characters each which is connected to J13 of figure 9B. In normal operation, the top line shows the most recently measured delay in seconds, and the bottom line shows elapsed time, in hours:minutes:seconds format, since the last measurement update:
Delay: .xxxx Sec.
Last Update xx:xx:xx
When an update event is detected, the lower line will flash an indication:
Delay: .xxxx Sec.
***New Update***
When a video alarm is detected, the lower line will alternate continuously between the normal display and an alarm message:
Delay: .xxxx Sec.
Alarm: Undly'd Video
or
Delay: .xxxx Sec.
Alarm: Dly'd Video
This display condition will persist until the alarm is cleared. In the event both video alarms are detected, the lower line will sequentially display all three messages.

A novel warning is provided to the operator if there is operation indicating that the Maximum Expected Delay is not set properly. If ten or more consecutive raw measurements, as explained in the next subsection, corresponding to fields beyond the Maximum Expected Delay DIP Switch setting occur, a warning is displayed:
Delay: .xxxx Sec.
WARN: Max Dly Switch
The lower line will alternate sequentially with other messages. If this warning is observed, the setting of the Maximum Expected Delay DIP Switch should be checked.

### DISPLAY INTERPRETATION/GENERAL OPERATIONAL CHARACTERISTICS

The displayed delay is the most recent delay count for the delayed video field determined to have the best correlation measurement relative to an undelayed video field. The delay count is measured internally in increments of 102.4 microseconds, and converted to the nearest .1 mS for presentation by the LCD display. A raw measurement consists of a relative field delay indication resulting from a qualified correlation. Five consecu- tive raw measurements, spaced a minimum of 2.4 seconds each apart, all returning the same relative field, are required for field determination. Whenever a raw measurement agreeing with all four previous raw measurements is obtained the ***New Update*** indication will flash, and the elapsed time indication will reset. At power up, delay is initialized to zero. Once five raw measurements in agreement are obtained the delay of the determined field, based on vertical sync timing, is presented without the aforementioned time diversity delays. The elimination of the time diversity delays speeds acquisition of the new delay value after powerup. A new displayed reading will continue to become available once per second, in response to vertical sync timing, as long as the most recent five raw measurements agree, subject to limitations described below.If the most recent five raw measurements are not all the same, the displayed reading will hold at the last known number. This will occur during initial field acquisition, field re-acquisition after an anomalous raw measurement, or new field acquisition. New field acquisition is required when the non-delayed and delayed video vertical syncs roll through one another. New field acquisition may also be required when large delay discontinuities occur. Because of the redundant time-diversified measurement technique, a minimum of 12 seconds is required for field acquisition or re-acquisition.

Field acquisition or re-acquisition is also required if the delay of the determined field becomes removed from the last raw measurement value by approximately 8 mS or more, in the absence of an alarm condition. In the presence of an alarm condition, acquisition or re-acquisition is required if the delay of.the determined field becomes removed from the last raw measurement value by approximately 1 mS or more. In these cases, a minimum of four raw measurements, covering a minimum of 9.6 seconds, is required. As before, the displayed reading will hold at the last known number until acquisition or re-acquisition is complete.

The pulse width of the DDO output signal corresponds to the displayed delay reading. SERIAL OUT data also corresponds to the displayed reading. These two signals retain the internal 102.4 microseconds resolution. The DDO pulse width is equal to the measured delay for all delays except zero. In the case of zero measured delay, the DDO pulse width is 102.4 microseconds. The repetition period of the DDO pulse is 840 milliseconds plus the pulse width. The repetition period of SERIAL OUT data is one second.

An abrupt scene change, rapid motion within a scene, or an abrupt brightness change within a scene, may be required to produce a raw measurement. Slow fades or subdued motion may not always produce a raw measurement. Program material of low brightness may produce fewer raw measurement opportunities.

Alarm indications result from loss of composite sync, or the assertion of the internal sync PLL lock alarms. During any alarm condition, all measurements are suspended, and the display reading, DDO width, and SERIAL OUT data are held at the last known value.

The preferred embodiment will now be described in more detail with respect to Figures 6-9. Operation of the preferred embodiment can be functionally divided into three areasdata acquisition, digital signal processing, and microcontroller/display.

### Data Acquisition, Figures 6 and 8

Data acquisition circuits for the non-delayed and delayed video signals are identical and independent, up to the point of joining the SPROC digital signal processor parallel port bus. Input amplifiers U1/U12 are configured as high impedance differential instrumentation amplifiers. This minimizes loop through loading, and provides some common mode rejection. Video clamp pulses are produced by sync strippers U10/U19 and monostable multivibrators U26A/U25A. U2A,B,C/U13A,B,C condition the video signal for the sync strippers.

Sync generators U3/U14 phase lock to the composite sync output from U10/U19. U3 and U14 produce horizontal, vertical, composite blanking, and clock signals utilized by PLDs U5/U16 and U7/U18. U5/U16 output field flags (RTS0/RTS2) to the SPROC. After reading these flags, the SPROC performs a write operation to U5/U16. U5/U16 decode this write, and clear the field flags. In each field, nine active video pixels from each of seven lines, spaced at 35 (NTSC) or 42 (PAL B/G) line intervals, are digitized to 8 bit resolution. U7/U18 produce the necessary timing signals for A/D converters U4/U15 and FIFO memories U6/U17. Analog video applied to U4/U15 from amplifiers U1/U12 is lowpass filtered by R8,C22 /R38,C46 so that only luminance information is digitized. U7/U18 output line flags (RTS1/RTS3) to the SPROC when FIFO data is ready. U5/U16 decode FIFO read enables from the SPROC bus. The first read enable also causes U7/U18 to reset the line flags. The SPROC reads the nine pixels from a given line at the average SPROC cycle interval of 102.4 microseconds. After all have been read, the FIFO is reset by U9A/U9B and U7/U18.

U3/U14 PLL tuning voltages are buffered by U2D/U13D, and then AC-coupled into window comparators U20/U23 and U21/U24. Tuning voltage transients resulting from loss of lock, or from a very noisy input signal, will exceed the window threshold. U20/U23 will then reset U22A/U22B, asserting active low alarm signal /ALARMND or /ALARMD. U22A/U22B also function as sync presence detectors. U22A/U22B are normally continuously retriggered by a 50% duty cycle H rate pulse from U26B/U25B. If sync is lost, U22A/U22B time out, asserting active low alarm signal /ALARMND or /ALARMD. Therefore, either PLL loop transients and/or complete loss of sync will produce an alarm condition.

DIP switch S1 is used to set the 4 bit maximum expected delay in fields. U5 decodes the read enable, causing tri-state buffer U11 to place the DIP switch settings on the SPROC bus.

JP20 selects NTSC or PAL B/G video format by altering applicable control inputs to U3, U7, U14, and U18.

### Digital Signal Processing Hardware Figure 7

DSP chip U36 (the "SPROC") executes the signal processing algorithm. U36 is clocked at 50MHz by TTL clock oscillator U47. JP2 selects master (jumper omitted) or slave (jumper installed) mode for U36. Master mode is used, so the JP2 jumper must be omitted. Communication between U36 and peripheral devices takes place via the SPROC parallel port. This port consists of 16 bit address bus ADRS [0..15], 24 bit data bus DATA[0..23], chip select /CSSPR, write /WRSPR, and read /RDSPR. These signals allow bidirectional 24, 16 or 8 bit parallel data transfer. RTS0 through RTS3 are one bit input lines. GP0 through GP3 are one bit input or output lines.

Upon power-up, watchdog timer U39 resets U36. When U36 comes out of reset, an internal bootstrap routine loads the SPROC program from EPROM U37 into internal RAM. Two programs may be stored in U37, selected by JP1. Normally, the "LO" position is used. When program loading is complete, execution begins. Execution is triggered by a 9765.625 Hz (10 MHz/1024) square wave applied to U36 pin 67 (COMPUTE0). This forms the effective DSP "sample rate". This trigger signal is generated from the 50MHz clock by dividers U46, U45, and U44.

J8 is the access port connector. J8 allows communication with internal registers of U36. DAC U38 provides an analog representation of internal U36 registers (output from the U36 probe port) under access port or U37 program control. Switched-capacitor filter U40 may be used as a reconstruction filter for the probe signal. U40 is clocked at 390.625 kHz by U45. U40 has a cutoff frequency of .01 times the clock frequency, or 3.906kHz. J8, U38, and U40 are provided for factory test use, and are not used during normal operation. J7 provides access to the RTS, GPIO, and COMPUTE lines. J10 and J9 provide access to the SPROC serial output and serial input ports, respectively. J7, J9, and J10 are not used in the preferred embodiment.

PLD U43 triggers watchdog timer U39 at regular intervals, when presented with the proper address and data from the SPROC. If these resets from U43 should cease, U39 will time out and issue a SPROC reset. S2 provides manual reset capability for test use. S2 is not used during normal operation. J16 provides power for LCD illumination.

### Microcontroller/Display Figure 9

The controller section reads measured delay data and certain status information from the DSP and data acquisition sections; operates the LCD display; and outputs serial data for remote control of the AD2100. EPROM U28 stores the program for microprocessor U34. Address/Data bus multiplexing is performed by U27. U34 requests parallel delay data from the SPROC by asserting active low line /READ DELAY. The SPROC then writes data to registers U30, U31 and U33. After /READ DELAY is de-asserted, U34 may read the contents of U30 and U31, and the LSB of U33. U30 and U31 contain delay data. The U33 LSB, when true, indicates a raw measurement attempt beyond the setting of the Maximum Expected Delay DIP Switch. PLD U29 performs read enable decoding.

Video alarm lines /ALARMND and /ALARMD are read by U34. AND gate U42B transmits a summary alarm line to SPROC input GP2. U34 also reads SPROC output line GP1. GP1 is asserted by the SPROC to indicate an update event. JP20 is read by U34, and used to indicate NTSC or PAL mode on the LCD display at power-up. U34 transfers delay, alarm, and update information to the LCD display via header J13. U34 also calculates and displays elapsed time since the last update.

JP3 selects the DDO pulse origin. If JP3-1 and JP3-2 are connected, the SPROC GP0 line is used. If JP3-2 and JP3-3 are connected, the DDO pulse originates from U34. Line driver U35A buffers the DDO signal, and outputs it to J5. Line drivers U35B and U35C buffer serial remote data and clock from U34, and output these signals to modular handset jack J6. RS-232 interface U32, and connector J12, provide a U34 serial port for factory test use only. U32 and J12 are not used during normal operation.

Register U33 provides expansion capability. Header J14 allows for connection of U33's outputs to the U34 bus.

### Setting Maximum Expected Delay

The Maximum Expected Delay DIP Switch, S1 is used to limit raw measurements to those within the expected valid range. While this switch is set by the operator in the preferred embodiment, It will be quite useful to set this value automatically by cooperation with the actual delaying mechanism, thus for example when video is processed in devices which can have a different maximum delay depending on the type of processing, the limit can be adjusted accordingly. For example, a compressed video decoder may have a different throughput delay depending on whether it delays PAL, HDTV or NTSC signals, and further depending on whether it operates with the MPEG 1 or the MPEG 2 compression standard. In this case, the current operation or the maximum delay may be coupled to the DSP section, for example by the expansion connectors which are provided.

When set, S1 will prevent possible anomalous measurements beyond the maximum anticipated number of fields of delay. It should be noted that if S1 is set below the actual maximum delay to be encountered, valid measurements may also be inhibited. The settings are as follows ("x" indicates "don't care") :

| MAXIMUM EXPECTED DELAY IN FIELDS | SWITCH POSITION | | | |
|---|---|---|---|---|
| | 4 | 3 | 2 | 1 |
| 1 | off | off | off | on |
| 2 | off | off | on | off |
| 3 | off | off | on | on |
| 4 | off | on | off | off |
| 5 | off | on | off | on |
| 6 | off | on | on | off |
| 7 | off | on | on | on |
| 8 | on | x | x | x |

A novel operator warning is provided if delays are consistently measured in excess of the maximum set on the switches. This assists the careless operator in making a proper setting while preventing the system from sending improper delay values during non-valid modes of video system operation.

### Jumper/Connector Settings

JP3: Jumper must be installed from pins 1 to 2. JP3 selects the source of the DDO pulse. JP3-1 to JP3-2 selects the SPROC, JP3-2 to JP3-3 selects the microcontroller should one wish to program the microcontroller to provide this function.

J14: J14 is not used. Must not have any jumpers installed.

JP1: Selects one of two SPROC signal processing programs. The preferred embodiment is normally operated with the jumper installed from pins 1 to 2 of JP1. This will select the program with the operational characteristics as described above.

JP2: Selects SPROC master or slave mode. Jumper omitted selects master mode, jumper installed selects slave mode. Jumpers and connectors J7, J8, J9, J10, and J12 are not used in the preferred embodiment. These jumpers and connectors, along with JP2, are omitted in the preferred embodiment but are provided to allow one of ordinary skill in the art to cascade SPROC ICs in order to add suggested improvements and enhancements which can not be programmed into a single device. 1.6. JP20: Selects NTSC (the two pins closest to the "NTSC" marking jumpered) or PAL B/G (the two pins closest to the "PAL" marking jumpered) mode. The LCD display indicates the selected mode at power-up.

### ADJUSTMENTS

1. LCD Display Viewing Angle: While observing the LCD display, adjust VR1 until the desired result is obtained.
2. Adjustment of High Frequency Common Mode Rejection: After the circuitry has warmed up for 20 minutes, apply a sine wave signal of amplitude approximately 1 V pk-pk and frequency approximately 1 MHz simultaneously to both the center and outer contacts of J1. Monitor TP4 on an oscilloscope, using a 10X probe. Connect the probe ground lead to TP8. Adjust VC1 for minimum signal. Apply the same signal to both the center and outer contacts of J3. Monitor TP6 on an oscilloscope, using a 10X probe. Connect the probe ground lead to TP8. Adjust VC2 for minimum signal.
3. Adjustment of Video A/D Converter Offsets: Allow a warm up for 20 minutes before making this adjustment. Apply a 0 IRE video signal to both inputs. Adjust VR2 such that U4 produces an average output word of 25 hex. Some toggling of the two lowest-order bits may be observed. The U4 output word may be observed at J17. J17 pin 8 is the MSB. U4's convert signal may be monitored at TP36. The input signal is sampled at the falling edge of the convert signal, and the corresponding output word becomes available after a rising edge of the convert signal, delayed by 2 1/2 convert signal cycles. Accuracy of the adjustment will be highest if samples taken near the end of a video line are used, since significant lowpass filtering is present ahead of U4. Similarly, adjust VR4 such that U15 produces an average output word of 25 hex. The U15 output word may be observed at J18. J18 pin 8 is the MSB. U15's convert signal may be monitored at TP37.

The identity of the DSP processor of the preferred embodiment, SPROC, is a trademark of Star Semiconductor Inc.While the present invention has been described in the particular form of its preferred embodiment by way of example, it will be understood that the invention disclosed herein may be practiced in other than the preferred embodiment, either by itself or in conjunction with other processing. The invention may be practiced with numerous changes in the arrangement, structure and combination of the individual elements, as well as with substitution of equivalent functions and circuits for the elements in order to optimize the invention for a particular application, all without departing from the scope of the invention as hereinafter claimed.

## Claims

1. An apparatus for determining the best match between a first image (9) and a plurality of other images (12), the apparatus comprising in combination:
(a) an element (18,19,20,28,29,30) for obtaining a first set of samples (11) of said first image (9) at known image locations (10),
(b) an element (21,22,23,28,29,30) for obtaining other sets of samples (13) consisting of samples from said plurality of other images (12) at similar known image locations,
(c) an element (24) for comparing said first set of samples (11) to said other sets of samples (13),
(d) an element (24) for determining which one of said other sets of samples (13) most closely matches said first set of samples (11)
the apparatus being further operative for determining the delay (3,6,7,8) of a relatively delayed version (2,5,12,17) of a sequence of said images with respect to a relatively undelayed version (1,4,16) of a sequence of said images including in combination:
in element (a) obtaining said first set of samples (11) of one of said images from one of said delayed or said undelayed sequences of said images, in element (b) obtaining said other sets of samples (13) for each of a plurality of said images of the other of said delayed or said undelayed sequences.

2. An apparatus as claimed in Claim 1 wherein said images are carried by a video signal in compressed data form.

3. An apparatus as claimed in Claim 1 wherein said element d) requires that said one of said other sets of samples which most closely matches said first set of samples matches within a known offset amount better than any other set which is compared.

4. An apparatus as claimed in Claim 3 wherein said offset amount is adjusted in response to image quality.

5. An apparatus as claimed in Claim 1 wherein said known image locations are contained in a circular area having a diameter which is between 10% and 50% less than the length of the smallest side of a rectangular image which circle is centered within said rectangle.

6. An apparatus as claimed in Claim 1 wherein said offset value of element d) is changed in response to the time from the last finding of a match of said sets in element d).

7. An apparatus as claimed in Claim 1 wherein said offset value of d) is changed in response to a restarting of the taking of samples of element a.

8. An apparatus as claimed in Claim 1 wherein said offset value of d) is changed in response to the removal of an alarm indicating an abnormal operation of element a) or b).

9. An apparatus as claimed in Claim 1 wherein said samples of a) are taken from one of the images from said undelayed sequence.

10. An apparatus as claimed in Claim 1 wherein said samples of b) are taken from said images from said delayed sequence.

11. An apparatus as claimed in Claim 1 wherein said element d) operates to determining which of said other sets of samples most closely matches said first set by a known offset value better than any other set and said offset value is adjusted in response to the noise on said delayed or undelayed sequence.

12. An apparatus as claimed in Claim 1 wherein said offset value of element d) is adjusted in response to the motion portrayed by said delayed or undelayed sequence.

13. An apparatus as claimed in claim 1 further including:
e) an element for outputting said delay in response to the matching of said first and another set of samples.

14. An apparatus as claimed in Claim 13 wherein element e) includes restricting the time between changing of said delay which is output.

15. An apparatus as claimed in Claim 13 wherein said images are carried by relatively delayed and undelayed video signals having vertical sync related portions and said delay of element e) is adjusted in response to the relationship of said vertical sync related portions of said delayed and undelayed video signals.

16. An apparatus as claimed in Claim 13 wherein said delay which is output in e) is held at a known value in response to an alarm indicating an abnormal operation of a) or b).

17. An apparatus as claimed in Claim 13 wherein said delay which is output in e) is limited to a maximum amount which maximum amount may be automatically or operator adjusted in response to the maximum expected delay.

18. An apparatus as claimed in Claim 13 wherein said delay which is output in e) is limited to a maximum amount, and upon determination of a predetermined number of delay measurements which exceed said maximum amount a warning condition is generated.

19. A method for determining the best match between a first image (9) and a plurality of other images (12), the method comprising the steps of:
(a) obtaining a first set of samples (11) of said first image (9) at known image locations (10),
(b) obtaining other sets of samples (13) from said plurality of other images (12) at similar said known image locations,
(c) comparing said first set of samples (11) to said other sets of samples (13),
(d) determining which one of said other sets of samples (13) most closely matches said first set (11)
the method being further operative for determining the delay (3,6,7,8) of a relatively delayed version (2,5,12,17) of a sequence of said images with respect to a relatively undelayed version (1,4,16) of a sequence of said images including in combination:
in step (a) obtaining said first set of samples (11) of one of said images from one of said delayed or said undelayed sequences of said images,
in step (b) obtaining said other sets of samples (13) for each of a plurality of said images of the other of said delayed or said undelayed sequences..

20. A method as claimed in Claim 19 wherein said image is rectangular, and said known image locations are located in a circle contained within said rectangular image.

21. A method as claimed in Claim 20 wherein said circle has a diameter which is between 10% and 50% less than the length of the smallest side of said rectangle which circle is centered within said rectangle.

22. A method as claimed in Claim 19 wherein said samples are obtained in response to the luminance portion but not the chroma portion of said images.

23. A method as claimed in Claim 19 wherein said samples are obtained in response to one or more color components but not the luminance portion of said images.

24. A method as claimed in Claim 19 wherein said step for determining which one of said other sets of samples most closely matches said first set requires that said one set match said first set within a known amount.

25. A method as claimed in Claim 19 wherein said step for determining which one of said other sets of samples most closely matches said first set requires that said one set match said first set within a known amount better than any other set of said other sets.

26. A method as claimed in Claim 24 or 25 wherein said known amount may be adjusted in response to a characteristic of said first image or said other images.

## Patentansprüche

1. Eine Vorrichtung zum Bestimmen der besten Übereinstimmung zwischen einem ersten Bild (9) und einer Vielzahl von anderen Bildern (12), wobei die Vorrichtung Folgendes in Kombination beinhaltet:
(a) ein Element (18, 19, 20, 28, 29, 30) zum Erhalten eines ersten Satzes Proben (11) des ersten Bildes (9) an bekannten Bildstellen (10),
(b) ein Element (21, 22, 23, 28, 29, 30) zum Erhalten anderer Sätze Proben (13), welche aus Proben von der Vielzahl von anderen Bildern (12) an ähnlichen bekannten Bildstellen bestehen,
(c) ein Element (24) zum Vergleichen des ersten Satzes Proben (11) mit den anderen Sätzen Proben (13),
(d) ein Element (24) zum Bestimmen, welcher der anderen Sätze Proben (13) am nächsten mit dem ersten Satz Proben (11) übereinstimmt,
wobei die Vorrichtung ferner für das Bestimmen der Verzögerung (3, 6, 7, 8) einer relativ verzögerten Version (2, 5, 12, 17) einer Folge der Bilder mit Bezug auf eine relativ unverzögerte Version (1, 4, 16) einer Folge der Bilder funktionsfähig ist, was Folgendes in Verbindung umfasst:
in Element (a) das Erhalten des ersten Satzes Proben (11) einer der Bilder von einer der verzögerten oder der unverzögerten Folge der Bilder, in Element (b) das Erhalten der anderen Sätze Proben (13) für jedes einer Vielzahl der Bilder der anderen der verzögerten oder der unverzögerten Folge.

2. Vorrichtung gemäß Anspruch 1, wobei die Bilder von einem Videosignal in einer komprimierten Datenform getragen werden.

3. Vorrichtung gemäß Anspruch 1, wobei das Element d) erfordert, dass der eine der anderen Sätze Proben, welcher am nächsten mit dem ersten Satz Proben übereinstimmt, innerhalb eines bekannten Verschiebungsbetrags besser übereinstimmt als jedweder andere Satz, der verglichen wird.

4. Vorrichtung gemäß Anspruch 3, wobei der Verschiebungsbetrag als Reaktion auf die Bildqualität angepasst wird.

5. Vorrichtung gemäß Anspruch 1, wobei die bekannten Bildstellen in einem kreisförmigen Bereich mit einem Durchmesser, welcher zwischen 10 % und 50 % weniger beträgt als die Länge der kürzesten Seite eines rechteckigen Bildes, enthalten sind, wobei der Kreis innerhalb des Rechtecks zentriert ist.

6. Vorrichtung gemäß Anspruch 1, wobei der Verschiebungswert von Element d) als Reaktion auf die Zeit von dem letzten Finden einer Übereinstimmung der Sätze in Element d) geändert wird.

7. Vorrichtung gemäß Anspruch 1, wobei der Verschiebungswert von d) als Reaktion auf ein Neustarten des Nehmens von Proben von Element a) geändert wird.

8. Vorrichtung gemäß Anspruch 1, wobei der Verschiebungswert von d) als Reaktion auf das Entfernen eines Alarms, welcher eine anomale Funktion von Element a) oder b) anzeigt, geändert wird.

9. Vorrichtung gemäß Anspruch 1, wobei die Proben von a) aus einem der Bilder von der unverzögerten Folge genommen werden.

10. Vorrichtung gemäß Anspruch 1, wobei die Proben von b) aus den Bildern von der verzögerten Folge genommen werden.

11. Vorrichtung gemäß Anspruch 1, wobei das Element d) funktioniert, um zu bestimmen, welcher der anderen Sätze Proben durch einen bekannten Verschiebungswert am nächsten mit dem ersten Satz, besser als jedweder andere Satz, übereinstimmt, und der Verschiebungswert als Reaktion auf das Rauschen auf der verzögerten oder unverzögerten Folge angepasst wird.

12. Vorrichtung gemäß Anspruch 1, wobei der Verschiebungswert von Element d) als Reaktion auf die Bewegung, welche durch die verzögerte oder unverzögerte Folge porträtiert wird, angepasst wird.

13. Vorrichtung gemäß Anspruch 1, die ferner Folgendes umfasst:
e) ein Element zum Ausgeben der Verzögerung als Reaktion auf das Übereinstimmen des ersten und eines anderen Satzes Proben.

14. Vorrichtung gemäß Anspruch 13, wobei Element e) das Beschränken der Zeit zwischen dem Ändern der Verzögerung, welche ausgegeben wird, umfasst.

15. Vorrichtung gemäß Anspruch 13, wobei die Bilder von relativ verzögerten und unverzögerten Videosignalen mit vertikalen synchronisationsbezogenen Abschnitten getragen werden und die Verzögerung von Element e) als Reaktion auf die Beziehung der vertikalen synchronisationsbezogenen Abschnitte der verzögerten und unverzögerten Videosignale angepasst wird.

16. Vorrichtung gemäß Anspruch 13, wobei die Verzögerung, welche in e) ausgegeben wird, als Reaktion auf einen Alarm, welcher eine anormale Funktion von a) oder b) anzeigt, auf einem bekannten Wert gehalten wird.

17. Vorrichtung gemäß Anspruch 13, wobei die Verzögerung, welche in e) ausgegeben wird, auf einen maximalen Betrag begrenzt ist, wobei der maximale Betrag als Reaktion auf die maximale erwartete Verzögerung automatisch oder von einem Bediener angepasst werden kann.

18. Vorrichtung gemäß Anspruch 13, wobei die Verzögerung, welche in e) ausgegeben wird, auf einen maximalen Betrag begrenzt ist und nach der Bestimmung einer zuvor bestimmten Anzahl an Verzögerungsmessungen, welche den maximalen Betrag überschreiten, ein Warnzustand hervorgerufen wird.

19. Ein Verfahren zum Bestimmen der besten Übereinstimmung zwischen einem ersten Bild (9) und einer Vielzahl von anderen Bildern (12), wobei das Verfahren die folgenden Schritte beinhaltet:
(a) Erhalten eines ersten Satzes Proben (11) des ersten Bildes (9) an bekannten Bildstellen (10),
(b) Erhalten anderer Sätze Proben (13) aus der Vielzahl von anderen Bildern (12) an ähnlichen der bekannten Bildstellen,
(c) Vergleichen des ersten Satzes Proben (11) mit den anderen Sätzen Proben (13),
(d) Bestimmen, welcher von den anderen Sätzen Proben (13) am nächsten mit dem ersten Satz (11) übereinstimmt,
wobei das Verfahren ferner funktionsfähig ist für das Bestimmen der Verzögerung (3, 6, 7, 8) einer relativ verzögerten Version (2, 5,12,17) einer Folge der Bilder mit Bezug auf eine relativ unverzögerte Version (1, 4,16) einer Folge der Bilder, was Folgendes in Kombination umfasst:
in Schritt (a) das Erhalten des ersten Satzes Proben (11) von einem der Bilder aus einer der verzögerten oder der unverzögerten Folge der Bilder,
in Schritt (b) das Erhalten des anderen Satzes Proben (13) für jedes einer Vielzahl der Bilder der anderen der verzögerten oder der unverzögerten Folge.

20. Verfahren gemäß Anspruch 19, wobei das Bild rechteckig ist und die bekannten Bildstellen in einem Kreis, welcher innerhalb des rechteckigen Bildes enthalten ist, liegen.

21. Verfahren gemäß Anspruch 20, wobei der Kreis einen Durchmesser aufweist, welcher zwischen 10 % und 50 % weniger beträgt als die Länge der kürzesten Seite des Rechtecks, wobei der Kreis innerhalb des Rechtecks zentriert ist.

22. Verfahren gemäß Anspruch 19, wobei die Proben als Reaktion auf den Luminanzabschnitt, aber nicht auf den Chrominanzabschnitt der Bilder erhalten werden.

23. Verfahren gemäß Anspruch 19, wobei die Proben als Reaktion auf eine oder mehrere Farbkomponenten, aber nicht den Luminanzabschnitt erhalten werden.

24. Verfahren gemäß Anspruch 19, wobei der Schritt zum Bestimmen, welcher der anderen Sätze Proben am nächsten mit dem ersten Satz übereinstimmt, erfordert, dass der eine Satz mit dem ersten Satz innerhalb eines bekannten Betrags übereinstimmt.

25. Verfahren gemäß Anspruch 19, wobei der Schritt zum Bestimmen, welcher der anderen Sätze Proben am nächsten mit dem ersten Satz übereinstimmt, erfordert, dass der eine Satz innerhalb eines bekannten Betrags besser mit dem ersten Satz übereinstimmt als jedweder andere Satz der anderen Sätze.

26. Verfahren gemäß Anspruch 24 oder 25, wobei der bekannte Betrag als Reaktion auf eine Charakteristik des ersten Bildes oder der anderen Bilder angepasst werden kann.

## Revendications

1. Appareil destiné à déterminer la meilleure correspondance entre une première image (9) et une pluralité d'autres images (12), l'appareil comportant en combinaison :
(a) un élément (18, 19, 20, 28, 29, 30) destiné à obtenir un premier jeu d'échantillons (11) de ladite première image (9) à des emplacements d'images connus (10),
(b) un élément (21, 22, 23, 28, 29, 30) destiné à obtenir d'autres jeux d'échantillons (13) constitués d'échantillons de ladite pluralité d'autres images (12) à des emplacements d'images connus similaires,
(c) un élément (24) destiné à comparer ledit premier jeu d'échantillons (11) auxdits autres jeux d'échantillons (13),
(d) un élément (24) destiné à déterminer lequel desdits autres jeux d'échantillons (13) correspond au plus près audit premier jeu d'échantillons (11)
l'appareil étant en outre apte à la détermination du retard (3, 6, 7, 8) d'une version relativement retardée (2, 5, 12, 17) d'une suite desdites images par rapport à une version relativement exempte de retard (1,4,16) d'une suite desdites images, ladite détermination comprenant en combinaison :
dans l'élément (a), l'obtention dudit premier jeu d'échantillons (11) de l'une desdites images à partir de l'une desdites suites retardée ou exempte de retard desdites images, dans l'élément (b), l'obtention desdits autres jeux d'échantillons (13) pour chacune des images d'une pluralité desdites images de l'autre suite parmi lesdites suites retardée ou exempte de retard.

2. Appareil selon la revendication 1, lesdites images étant transportées par un signal vidéo sous la forme de données compressées.

3. Appareil selon la revendication 1, ledit élément d) requérant que ledit un desdits autres jeux d'échantillons correspondant au plus près audit premier jeu d'échantillons corresponde dans un intervalle connu de décalage mieux que tout autre jeu faisant l'objet de la comparaison.

4. Appareil selon la revendication 3, ledit intervalle de décalage étant réglé en réponse à la qualité d'image.

5. Appareil selon la revendication 1, lesdits emplacements d'images connus étant contenus dans une zone circulaire présentant un diamètre compris entre 10 % et 50 % de moins que la longueur du plus petit côté d'une image rectangulaire, ledit cercle étant centré à l'intérieur dudit rectangle.

6. Appareil selon la revendication 1, ledit intervalle de décalage de l'élément d) étant réglé en réponse au temps écoulé depuis la dernière correspondance trouvée entre lesdits jeux dans l'élément d).

7. Appareil selon la revendication 1, ledit intervalle de décalage de d) étant réglé en réponse au redémarrage de la prise d'échantillons de l'élément a).

8. Appareil selon la revendication 1, ledit intervalle de décalage de d) étant réglé en réponse à l'interruption d'une alerte indiquant un fonctionnement anormal de l'élément a) ou b).

9. Appareil selon la revendication 1, lesdits échantillons de a) étant pris à partir d'une des images de ladite suite exempte de retard.

10. Appareil selon la revendication 1, lesdits échantillons de b) étant pris à partir desdites images de ladite suite retardée.

11. Appareil selon la revendication 1, ledit élément d) fonctionnant pour déterminer lequel desdits autres jeux d'échantillons correspond au plus près audit premier jeu dans un intervalle connu de décalage mieux que tout autre jeu et ledit intervalle de décalage étant réglé en réponse au bruit présent sur ladite suite retardée ou exempte de retard.

12. Appareil selon la revendication 1, ledit intervalle de décalage de l'élément d) étant réglé en réponse au mouvement décrit par ladite suite retardée ou exempte de retard.

13. Appareil selon la revendication 1 comprenant en outre :
e) un élément de sortie dudit retard en réponse à la correspondance entre ledit premier jeu et un autre jeu d'échantillons.

14. Appareil selon la revendication 13, l'élément e) comprenant la limitation du temps entre les variations dudit retard fourni en sortie.

15. Appareil selon la revendication 13, lesdites images étant transportées par des signaux vidéo relativement retardé et exempt de retard présentant des portions de synchronisation verticales corrélées, et ledit retard de l'élément e) étant réglé en réponse à la relation entre lesdites portions de synchronisation verticales corrélées desdits signaux vidéo retardé et exempt de retard.

16. Appareil selon la revendication 13, ledit retard fourni en sortie par l'élément e) étant maintenu à une valeur connue en réponse à une alerte indiquant un fonctionnement anormal de a) ou de b).

17. Appareil selon la revendication 13, ledit retard fourni en sortie par l'élément e) étant limité à une valeur maximale, laquelle valeur maximale peut être réglée automatiquement ou par un opérateur en réponse au retard maximum attendu.

18. Appareil selon la revendication 13, ledit retard fourni en sortie par l'élément e) étant limité à une valeur maximale, et un état d'avertissement étant généré suite à la détermination d'un nombre prédéterminé de mesures de retard dépassant ladite valeur maximale.

19. Procédé pour déterminer la meilleure correspondance entre une première image (9) et une pluralité d'autres images (12), le procédé comportant les étapes consistant à :
(a) obtenir un premier jeu d'échantillons (11) de ladite première image (9) à des emplacements d'images connus (10),
(b) obtenir d'autres jeux d'échantillons (13) de ladite pluralité d'autres images (12) à des emplacements d'images connus similaires,
(c) comparer ledit premier jeu d'échantillons (11) auxdits autres jeux d'échantillons (13),
(d) déterminer lequel desdits autres jeux d'échantillons (13) correspond au plus près audit premier jeu d'échantillons (11)
le procédé étant en outre apte à la détermination du retard (3, 6, 7, 8) d'une version relativement retardée (2, 5, 12, 17) d'une suite desdites images par rapport à une version relativement exempte de retard (1, 4, 16) d'une suite desdites images, ladite détermination comprenant en combinaison :
à l'étape (a), l'obtention dudit premier jeu d'échantillons (11) de l'une desdites images à partir de l'une desdites suites retardée ou exempte de retard desdites images,
à l'étape (b), l'obtention desdits autres jeux d'échantillons (13) pour chacune des images d'une pluralité desdites images de l'autre suite parmi lesdites suites retardée ou exempte de retard.

20. Procédé selon la revendication 19, ladite image étant rectangulaire et lesdits emplacements d'images connus étant situés dans un cercle contenu à l'intérieur de ladite image rectangulaire.

21. Procédé selon la revendication 20, ledit cercle présentant un diamètre compris entre 10 % et 50 % de moins que la longueur du plus petit côté dudit rectangle, ledit cercle étant centré à l'intérieur dudit rectangle.

22. Procédé selon la revendication 19, lesdits échantillons étant obtenus en réponse à la portion de luminance, mais pas à la portion de chrominance, desdites images.

23. Procédé selon la revendication 19, lesdits échantillons étant obtenus en réponse à une ou plusieurs composantes de couleur, mais pas à la portion de luminance, desdites images.

24. Procédé selon la revendication 19, ladite étape consistant à déterminer lequel desdits autres jeux d'échantillons correspond au plus près audit premier jeu requérant que ledit jeu corresponde audit premier jeu dans un intervalle connu.

25. Procédé selon la revendication 19, ladite étape consistant à déterminer lequel desdits autres jeux d'échantillons correspond au plus près audit premier jeu requérant que ledit jeu corresponde audit premier jeu dans un intervalle connu mieux que tout autre jeu parmi lesdits autres jeux.

26. Procédé selon la revendication 24 ou 25, ledit intervalle connu pouvant être réglé en réponse à une caractéristique de ladite première image ou desdites autres images.
